Europäisches Patentamt

European Patent Office

Office européen des brevets

(19)

(11) Numéro de publication : **0 019 545**
**B1**

# (12) FASCICULE DE BREVET EUROPÉEN

(45) Date de publication du fascicule du brevet :
08.02.84

(21) Numéro de dépôt : 80400664.1

(22) Date de dépôt : 13.05.80

(51) Int. Cl.³ : **H 04 N 7/04**

(54) Système de vidéographie muni de moyens de protection contre les erreurs de transmission.

(30) Priorité : 16.05.79 FR 7912472

(43) Date de publication de la demande :
26.11.80 Bulletin 80/24

(45) Mention de la délivrance du brevet :
08.02.84 Bulletin 84/06

(84) Etats contractants désignés :
BE CH DE GB IT LI NL SE

(56) Documents cités :
DE-A- 2 812 435
DE-A- 2 821 886
US-A- 3 982 065
IBM TECHNICAL DISCLOSURE BULLETIN, vol. 4, no.
1, Juin 1961, NEW YORK (US), HSIAO: "Synchronizing
circuit", pages 21 et 22
IBM TECHNICAL DISCLOSURE BULLETIN, vol. 15,
no. 1, Juin 1972, NEW YORK (US), GALPIN: "Digital
Synchronizer", pages 81-83
WIRELESS WORLD, vol. 81, no. 1479, novembre 1975
HAYWARDS HEATH SUSSEX (GB) DARRINGTON:
"Wireless World Teletext decoder", pages 498-504

(73) Titulaire : Etablissement Public de Diffusion dit
"Télédiffusion de France"
21-27 rue Barbès
F-92120 Montrouge (FR)
Fournier, Claude
22, Allée Henri Bergson
F-35100 Rennes (FR)
Roche, Christian
13, rue Duguay-Trouin
F-35530 Noyal Sur Vilaine (FR)

(72) Inventeur : Marti, Bernard
La Pièce Chevalière Les Motals
F-35530 Noyal Sur Vilaine (FR)
Inventeur : Poignet, Alain
11, rue du Nivernais
F-35000 Rennes (FR)
Inventeur : Fournier, Claude
22, Allée Henri Bergson
F-35100 Rennes (FR)
Inventeur : Roche, Christian
13, rue Duguay-Trouin
F-35530 Noyal Sur Vilaine (FR)

(74) Mandataire : Mongrédien, André et al
c/o BREVATOME 25, rue de Ponthieu
F-75008 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**0 019 545**

Système de vidéographie muni de moyens de protection contre les erreurs de transmission

La présente invention a pour objet un procédé de protection contre les erreurs de transmission en vidéographie et un récepteur mettant en œuvre ce procédé. Elle trouve une application dans la transmission et l'affichage d'informations sur des récepteurs de télévision à des fins quelconques de distraction, d'information ou d'enseignement.

L'invention s'applique notamment au système dit « ANTIOPE » (Acquisition Numérique et Télévisualisation d'Images Organisées en Pages d'Ecriture) qui est un système de vidéographie diffusé (donc unidirectionnel) permettant d'insérer sur des voies de télévision des informations alphanumériques organisées en pages et en magazines. Dans un tel système, la diffusion des informations s'effectue par des moyens et une procédure dénommée « DIDON » (Diffusion de Données Numériques). Cette procédure est compatible avec la diffusion du signal de télévision.

De nombreux articles ou demandes de brevet ont déjà décrit ce système. On pourra en trouver une description détaillée, notamment dans les documents suivants :

— l'article de Y. Guinet intitulé « Etude comparative des systèmes de télétexte en radiodiffusion. Quelques avantages de la diffusion des données par paquets appliquée au télétexte » paru dans la revue de l'U.E.R. cahier technique, n° 165, octobre 1977, pages 242 à 253 ;

— l'article de B. Marti et M. Mauduit intitulé « ANTIOPE, service de télétexte » paru dans la revue « Radiodiffusion Télévision », 9ᵉ année, n° 40, novembre-décembre 1975, 5/5 pages 18 à 23 ;

— la « Spécification du système de télétexte ANTIOPE », éditée par le Centre Commun d'Etudes de Télévision et Télécommunications (CCETT) ;

— la demande de brevet français FR-A-2 313 825 publiée le 31.12.76 et intitulée « Système de diffusion de données » ;

— la demande de brevet français FR-A-2 363 949 publiée le 31.03.78 et intitulée « Système de transmission numérique et d'affichage de texte sur un écran de télévision » ; la demande de brevet français FR-A-2 365 843 publiée le 21.04.78 et intitulée « Perfectionnements aux systèmes de transmission numérique et d'affichage de textes sur un écran de télévision » ;

— la demande de certificat d'addition français FR-A-2 393 480 publiée le 29.12.78 et intitulée « Système de diffusion de données ».

Le système ANTIOPE étant ainsi largement connu, il ne sera pas décrit ici en détail. On se bornera à en rappeler les principes essentiels, dans le but de faciliter la compréhension de l'invention. Pour tout détail de conception ou de réalisation, on pourra toujours se reporter aux documents cités plus haut, qui eux-mêmes renvoient à d'autres, tous ces documents devant être considérés comme incorporés à la présente description.

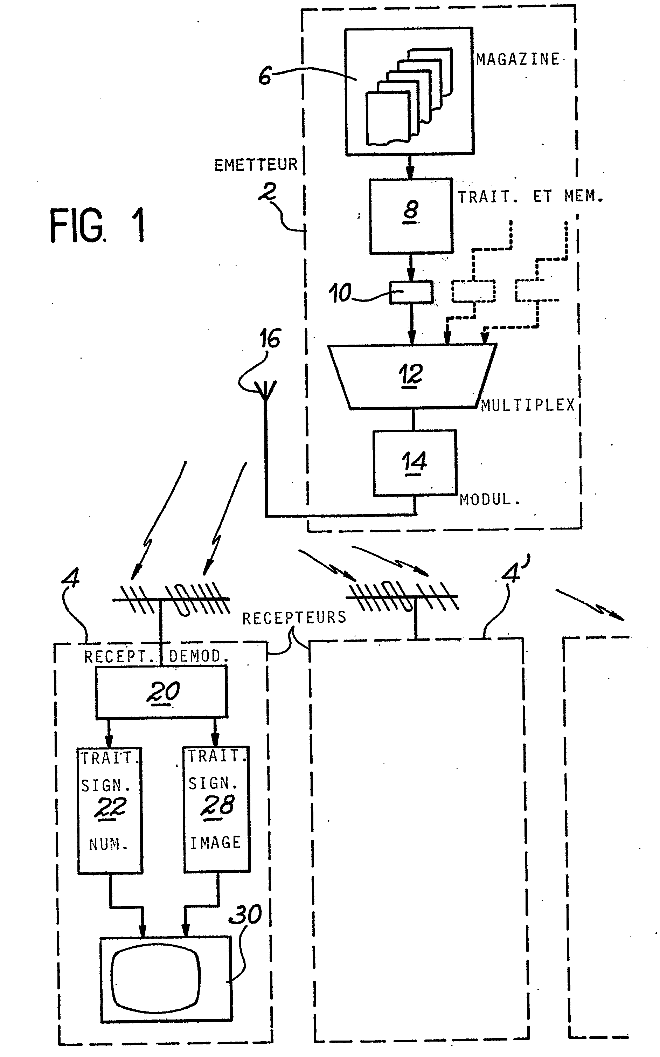

La figure 1 rappelle très schématiquement les éléments essentiels d'un système de vidéographie ANTIOPE. Un tel système comprend un centre d'émission 2 et des postes récepteurs 4, 4', etc... Le centre d'émission comprend :

— un moyen 6 de composition d'un magazine constitué de pages organisées en rangées de caractères. Ce moyen est alimenté par une banque de données qui est, par exemple, un service météorologique, la Bourse, une agence d'informations, etc...

— un circuit 8 de traitement et de mémorisation du magazine sous forme de signaux numériques groupés en octets (8 éléments binaires), qui se répartissent en octets de données et en octets de commande,

— une jonction 10 reliée au circuit 8,

— un multiplexeur 12 servant à la constitution de paquets d'octets et à l'insertion des informations dans les lignes d'un signal de télévision, ce moyen mettant en œuvre la procédure DIDON évoquée plus haut,

— un organe de modulation 14,

— et enfin une antenne 16.

Chaque poste récepteur (ou « terminal ») comprend :

— un circuit 20 de réception et de démodulation d'un signal de télévision ;

— une voie 22 de traitement des signaux numériques,

— une voie 28 de traitement des signaux vidéo d'image,

— un organe 30 de visualisation.

Dans le système ANTIOPE, les octets véhiculant l'information sont notés traditionnellement de la manière suivante :

$$\underbrace{b_8 \quad b_7 \quad b_6 \quad b_5}_{j} \quad \underbrace{b_4 \quad b_3 \quad b_2 \quad b_1}_{k}$$

L'élément binaire $b_8$ est un élément d'imparité, autrement dit un élément tel que le nombre total de « 1 » figurant dans l'octet soit impair. Selon cette notation, l'octet $(j/k) = (4/7)$ correspond ainsi à l'octet 11000111.

2

Les octets se divisent en octets de commande et en octets de données. Les octets de commande indiquent notamment des en-têtes et des fins de pages, des en-têtes et des fins de rangées ainsi que des attributs de visualisation. Les octets de données, insérés entre des octets de commande, correspondent à des caractères contenus dans les rangées. Tous ces octets, qu'ils soient de commande ou de données, comprennent l'élément binaire $b_8$ d'imparité.

A titre d'exemple, une page courante d'information, accessible à l'usager, se présente sous la forme suivante :

1) Elle contient tout d'abord un en-tête de page, qui se compose des codes de commande :
(ETX) FF RS $NP_1$ $NP_2$ $NP_3$ :
où
ETX est un code qui termine la page précédente,
FF(0,12) est un code qui indique une nouvelle page,
RS(1,14) est un drapeau de page,
$NP_1$, $NP_2$, $NP_3$ sont des codes indiquant un numéro de page allant de 001 à 999.

2) Après l'en-tête de page, figure une rangée « zéro » :
US OO $C_1$ $C_2$ $C_3$ ... RC LF,
où
US(1,15) est un drapeau de rangée,
OO indique le rang zéro,
$C_1$, $C_2$, $C_3$ sont des codes complémentaires,
RC(0,13), LF(0,10) terminent la rangée.
La rangée zéro peut contenir aussi un nom de service, une date, une heure et éventuellement des indications de taxation. Cette rangée zéro ne véhicule pas d'information constituant le service. Elle fait partie de la procédure.

3) Après la rangée zéro, viennent des rangées d'information comprenant d'abord un en-tête de rangée, qui se compose des codes US, $NR_1$, $NR_2$,
où
US est le drapeau de rangée,
$NR_1$, $NR_2$ constituent le numéro de rangée qui va de 01 à 24, puis des octets de données $d_1$, $d_2$, ..., $d_n$, qui sont insérés entre l'en-tête de rangée et soit une fin de rangée RC, LF, soit une fin de page ETX. Ces octets $d_1$, $d_2$, ..., $d_n$ représentent l'information constituant le service diffusé.

Quant aux changements d'attributs de visualisation, ils sont transmis par des séquences précédées du code d'échappement ESC(1,11). Ces attributs sont : la couleur, la couleur de fond, la taille (double hauteur, double largeur), le clignotement, la forme des symboles (choix des symboles alphanumériques ou semi-graphiques), l'incrustation, le masquage.

Ce bref rappel étant effectué, on peut aborder le problème que se propose de résoudre la présente invention.

Il s'agit essentiellement du problème des erreurs commises lors de la transmission de l'information entre le centre d'émission et les différents postes récepteurs et de la réduction des défauts occasionnés par ces erreurs.

Toute transmission numérique introduit un certain taux d'erreur et un certain taux de perte. Mais alors que les équipements utilisés avec les réseaux de câbles numériques sont conçus en tenant compte de ces risques d'erreurs, il n'en est pas de même lorsque le support est un réseau de télévision qui est conçu avant tout pour transmettre une information de caractère analogique. L'impossibilité d'interrompre le message et de demander sa répétition aggrave encore la situation.

Les défauts dus aux erreurs de transmission ont fait l'objet d'évaluations : on a pu montrer que pour 95 % des usagers, le taux d'erreur est inférieur ou égal à $10^{-3}$ et le taux de perte à $10^{-4}$, les erreurs étant indépendantes et les pertes portant sur un ou plusieurs octets.

Si l'on désigne par p la probabilité d'erreur en transmission sur un élément binaire, le taux de perte vaut sensiblement $100p^2$, ce qui donne un octet perdu pour 80 octets faux lorsque $p = 10^{-3}$. On peut donc considérer que jusqu'à cette valeur, la probabilité de perte est négligeable devant celle d'erreur. Pour une page moyenne de 800 octets environ, on trouve 7 erreurs par page pour $p = 10^{-3}$ si le terminal n'effectue aucune correction, alors qu'une erreur par page-écran semble être le maximum tolérable. Un taux d'erreur de $10^{-4}$ constitue donc une limite à ne pas dépasser pour une exploitation correcte du système.

L'invention a justement pour objet un moyen qui rend le système ANTIOPE exploitable au-delà de cette limite et jusqu'à environ $10^{-3}$ pour le taux d'erreur.

Pour préciser ces questions, il est nécessaire d'analyser les différents défauts que les erreurs de transmission peuvent créer sur un écran d'affichage.

Les défauts « élémentaires » sont constitués par les différences visuelles, entre la page affichée et la page émise. Ils peuvent s'ajouter les uns aux autres (du moins jusqu'à un certain nombre, car le système ANTIOPE ne fonctionne plus si les défauts sont trop nombreux). Ces défauts sont, par ordre de tailles décroissantes des zones affectées :

1. la perte de page,
2. l'interférence de page,
3. la page incomplète,
4. l'interférence de rangées(s),
5. le décadrage de rangée(s),
6. l'attribut de visualisation incorrect (couleur, taille, alphabet, etc...),
7. l'affichage de symbole(s) d'erreur,
8. l'affichage de symbole(s) erroné(s).

Les défauts de 1 à 5 constituent une première classe de défauts dits de « mise en page ». Ce sont les plus graves, car ils affectent de façon considérable la qualité du service de cidéotex. Les autres défauts définissent une classe subalterne et leur influence sur la qualité de l'image est moins grande et peut varier considérablement d'un service à l'autre. Par exemple, l'affichage de symboles d'erreur est préférable à l'affichage de symboles erronés dans une application chiffrée (bourses, horaires par exemple) alors que dans les magazines d'informations générales, quelques symboles erronés peuvent passer inaperçus, mais que des symboles d'erreur peuvent être ressentis comme une gêne.

Les défauts de mise en page rendent incohérente l'information et cette gêne est importante dans toutes les applications. C'est pourquoi l'invention leur attache une importance particulière.

A cette fin, l'invention prévoit l'introduction d'une redondance dans les signaux émis et l'utilisation de cette redondance, à la réception, pour réduire la probabilité des défauts. On sait qu'une redondance est déjà prévue dans les systèmes de l'art antérieur puisque les octets transmis sont protégés par un codage de Hamming (de type 8,4) et contiennent un élément binaire d'imparité ($b_8$). Mais cette protection s'avère insuffisante pour les octets de commande, si l'on veut réduire efficacement les défauts de mise en page.

Pour renforcer cette protection, l'invention prévoit d'utiliser (au moins pour les commandes principales) une séquence redondante de codes de commande. Des codes supplémentaires sont ainsi associés aux codes habituels pour former des séquences redondantes, ces codes n'ayant aucune signification particulière pour les récepteurs qui ne seraient pas munis de moyens d'exploitation de la redondance, ce qui assure la compatibilité du système protégé conforme à l'invention avec les récepteurs non protégés antérieurs.

Il faut noter que ce problème de la correction des erreurs revêt un caractère particulier dans le système de vidéographie ANTIOPE, et qu'il ne se pose pas dans les mêmes termes pour d'autres systèmes comme le TELETEXT du Royaume-Uni. Dans ce dernier, l'information de mise en page est définie par rapport au signal analogique. Le début de la rangée est en effet déduit du début de la ligne porteuse de données numériques, et chaque octet, à partir du début de rangée, se voit attribuer une place physique sur l'écran. Quant aux codes de changement d'attribut, ils sont visualisés comme des espaces.

Dans le système ANTIOPE en revanche, le système est asynchrone et le format variable. Il en résulte que la position d'un code dans la ligne de données n'a aucune relation avec la position qu'occupera le caractère correspondant dans une rangée de l'écran ; par ailleurs, les codes de changement d'attribut sont exploités sans occuper sur l'écran d'espaces inutiles.

Le système TELETEXT du Royaume-Uni possède donc une bonne résistance intrinsèque au niveau de la mise en page : les caractères même faux s'écrivent toujours dans le bon ordre au sein d'une rangée, et les interférences entre rangées sont rares. Ce n'est évidemment pas le cas pour le système ANTIOPE.

En revanche, ce dernier système offre un avantage qui est celui de son format variable. De ce fait, il se prête bien à l'introduction de signaux de contrôle et il est toujours possible d'introduire de la redondance sous forme d'octets supplémentaires ; mieux encore, cette redondance peut être adaptée aux besoins spécifiques d'un service particulier. On peut donc définir différents langages redondants de différents niveaux.

Il faut observer que le brevet US-A-3 982 065 décrit déjà un système de transmission de données par canal de télévision, utilisant des moyens permettant de relever des erreurs commises dans les données numériques transmises. Une redondance est obtenue par un élément binaire de parité rendant celle-ci paire, par un autre élément binaire de parité rendant celle-ci impaire et par sept éléments binaires qui sont les compléments des éléments binaires de donnée et de parité.

Ce type de redondance affecte les données numériques et non les séquences de codes de commande, comme dans la présente invention. C'est pour cette raison que le récepteur conforme au brevet cité n'est capable que de noter des erreurs de parité mais n'est pas capable de traiter des séquences de plusieurs codes de commande.

De façon plus précise, l'invention a pour objet un procédé de protection contre les erreurs de transmission dans un système de vidéographie asynchrone et de format variable conforme à la revendication 1.

Par ce procédé, l'exploitation de la redondance au niveau des récepteurs conduit à deux fonctions : l'une de correction des erreurs, l'autre de signalisation des erreurs lorsque celles-ci ne peuvent être corrigées. A cette fin, le circuit identificateur des récepteurs est apte :

— à corriger les séquences de commande de deux codes erronées qui comprennent un octet et un seul invalide au sens de la parité (octet noté X),

**0 019 545**

— pour corriger les séquences de commande de 3 codes erronées qui comprennent jusqu'à 2 octets X sans octet Z, en notant Z un octet valide au sens de la parité, mais qui n'appartient pas à la séquence en cours,

— à signaler les séquences erronées qui comprennent un nombre d'octets X, et d'octets Z supérieur à une valeur déterminée qui dépend de la longueur de la séquence, ou qui comprennent un octet X et un octet Z.

L'introduction de la redondance peut se faire à plusieurs niveaux et de plusieurs manières, selon le degré de protection que l'on veut obtenir et les commandes que l'on veut protéger.

Dans une première variante, la redondance est introduite au niveau du début de page de la manière suivante :

A) dans l'émetteur, le circuit de formation de séquence est apte à constituer, pour chaque début de page, une séquence de deux codes formés par le code RS habituel précédé d'un code n'ayant aucune signification pour les récepteurs non munis de circuit identificateur, par exemple le code SOH, la séquence s'écrivant alors (SOH ; RS) ;

B) le circuit identificateur est apte :

— à reconnaître des séquences telles que :

$$(SOH ; RS), (X ; RS), (SOH ; X)$$

et à restituer dans les trois cas le code habituel de drapeau page RS,

— à reconnaître qu'il y a erreur dans des séquences telles que :

$$(X ; X), \quad (Z ; RS), \quad (SOH ; Z).$$

Pour ce qui est de la commande de fin de page, repérée habituellement par le code noté ETX, on peut prévoir que :

A) dans l'émetteur, le circuit de formation de séquence est apte à constituer, pour chaque fin de page, une séquence formée par le code ETX suivi d'un code n'ayant aucune signification pour les récepteurs non munis du circuit identificateur, par exemple le code EOT,

B) le circuit identificateur est apte :

— à reconnaître des séquences telles que :

$$(ETX ; EOT), \quad (ETX ; X), \quad (X ; EOT)$$

et à restituer, dans les trois cas, le code habituel de fin de page ETX ;

— à reconnaître qu'il y a erreur dans des séquences telles que :

$$(X ; X), \quad (Z ; EOT), \quad (ETX ; Z).$$

La redondance peut également être introduite et exploitée au niveau des rangées.

On a vu que la synchronisation de ces rangées est repérée, soit par le code habituel de retour chariot RC suivi du code de saut de ligne LF, soit par le code de drapeau de rangée US suivi du numéro de rangée. Selon l'invention, il est prévu que :

A) dans l'émetteur, le circuit de formation de séquence est apte à constituer, pour chaque début de rangée, une séquence de trois codes (RC ; LF ; US),

B) le circuit identificateur est apte :

— à reconnaître les séquences

| | |
|---|---|
| (RC ; LF ; US) | (RC ; X ; X) |
| (X ; LF ; US) | (X ; LF ; X) |
| (RC ; X ; US) | (Z ; LF ; US) |
| (RC ; LF ; X) | (RC ; Z ; US) |
| (X ; X ; US) | (RC ; LF ; Z) |

et à restituer, dans les dix cas, le code habituel de début de rangée,

— à reconnaître qu'il y a erreur dans les séquences comportant (X ; X ; X) ou « X et Z ».

Enfin, la redondance peut être introduite et exploitée au profit des attributs de visualisation de caractères, qui sont traditionnellement repérés par un code d'échappement ESC suivi d'un second code spécifiant l'attribut (conformément à la norme ISO 2022).

5

Pour protéger ces séquences, en respectant les normes internationales, il n'y a pas d'autres solutions que de les répéter.

On peut alors doubler systématiquement les séquences de changement de taille, ainsi que les séquences d'incrustation et de masquage.

Dans ces conditions, il est prévu que :

A) dans l'émetteur, le circuit de formation de séquence est apte à constituer, pour certains attributs de visualisation, une séquence de quatre codes : le code ESC suivi d'un code noté Y le tout doublé, soit (ESC ; Y ; ESC ; Y),

B) le circuit identificateur est apte :
— à reconnaître les séquences

$$(ESC ; Y ; ESC ; Y), (ESC ; X ; ESC ; Y), (ESC ; Y ; X ; Y) \text{ et } (X ; Y ; ESC ; Y)$$

et à restituer dans les quatre cas, le code habituel (ESC ; Y),
— à reconnaître qu'il y a erreur dans des séquences telles que :

$$(X ; X ; ESC ; Y)$$
$$(ESC ; X ; X ; Y)$$
$$(X ; Y ; X ; Y)$$
$$(Z ; Y ; ESC ; Y)$$
$$(ESC ; Z ; ESC ; Y)$$
$$(ESC ; Y ; Z ; Y) .$$

C) pour les séquences (ESC ; Y) non doublées, le circuit identificateur est capable de reconnaître des séquences (X ; Y) où X diffère des ESC d'un seul élément binaire et à indiquer au décodeur cette erreur de sorte que ni X ni Y ne soient faussement considérés comme caractères à visualiser.

Naturellement, la protection peut intervenir simultanément sur tous ces codes et également sur d'autres codes que ceux dont il vient d'être question et notamment sur des codes visualisables. Mais la protection conduit rapidement, dans ce dernier cas, à une redondance considérable, supérieure à 50 %, dans la zone protégée. Ce genre de correction n'a donc de sens que pour des applications très particulières (par exemple pour les cours de la Bourse, les horaires de transport, etc...) qui ne peuvent tolérer aucune erreur sur les codes visualisables malgré un taux d'erreur en transmission éventuellement élevé. On sait que ces codes visualisables à protéger sont transmis chacun sur deux octets codés par Hamming, l'un des octets portant 3 éléments d'information et l'autre 4. On définit alors, selon l'invention, le début de zone par une séquence doublée telle que : VT ; LF ; VT ; LF. On définit la fin de zone par une combinaison de deux octets utilisant l'élément binaire laissé libre par les codes visualisables.

Ce langage non compatible conduit à définir plusieurs niveaux de langage redondant, qui ne seront pleinement exploitables par le terminal que si ce dernier est informé de la structure du message qu'il traite. Cette identification du langage est possible au moyen d'un octet dit de service, prévu par les spécifications et placé avant les octets qui décrivent la page, au niveau de l'en-tête de page.

De toute façon, les caractéristiques et avantages de l'invention apparaîtront mieux après la description qui suit, d'exemples de réalisation donnés à titre explicatif et nullement limitatif. Cette description se réfère à des dessins annexés sur lesquels :

la figure 1, déjà décrite, représente un schéma synoptique d'un système de vidéographie,

la figure 2 représente le schéma synoptique d'un équipement d'émission,

la figure 3 représente un schéma synoptique d'un récepteur équipé d'un circuit identificateur conforme à l'invention,

la figure 4 représente un schéma synoptique d'un circuit identificateur,

la figure 5 représente un schéma synoptique d'un automate de sélection de page,

la figure 6 représente un schéma synoptique d'un automate de première acquisition,

la figure 7 représente un schéma synoptique d'un premier module de chargement,

la figure 8 représente un schéma synoptique d'un second module de chargement,

la figure 9 représente un schéma synoptique d'un troisième module de chargement,

la figure 10 représente un circuit logique apte à engendrer un signal de commande du troisième module de chargement,

la figure 11 représente un schéma synoptique d'un automate d'acquisitions ultérieures.

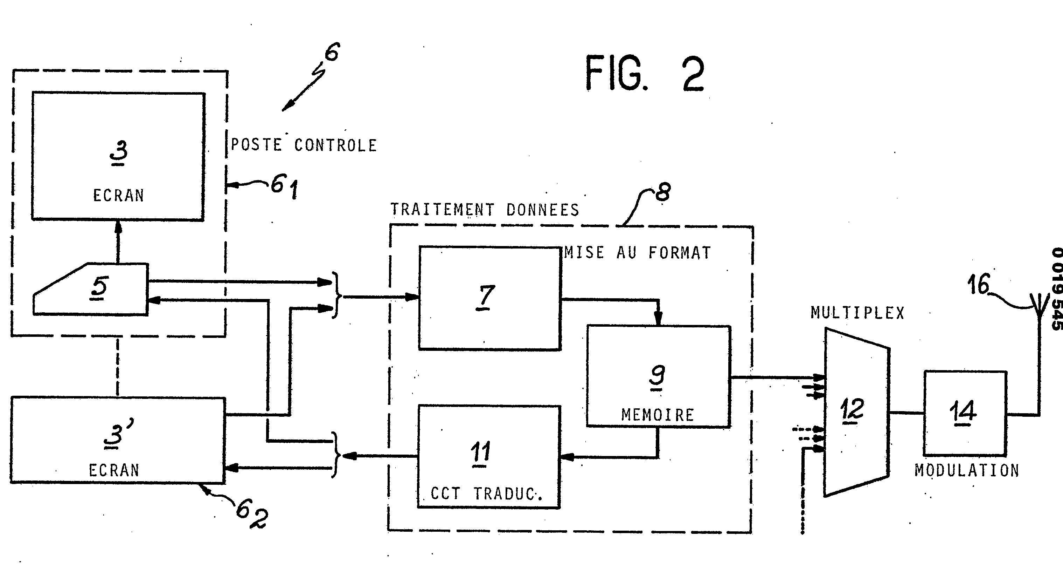

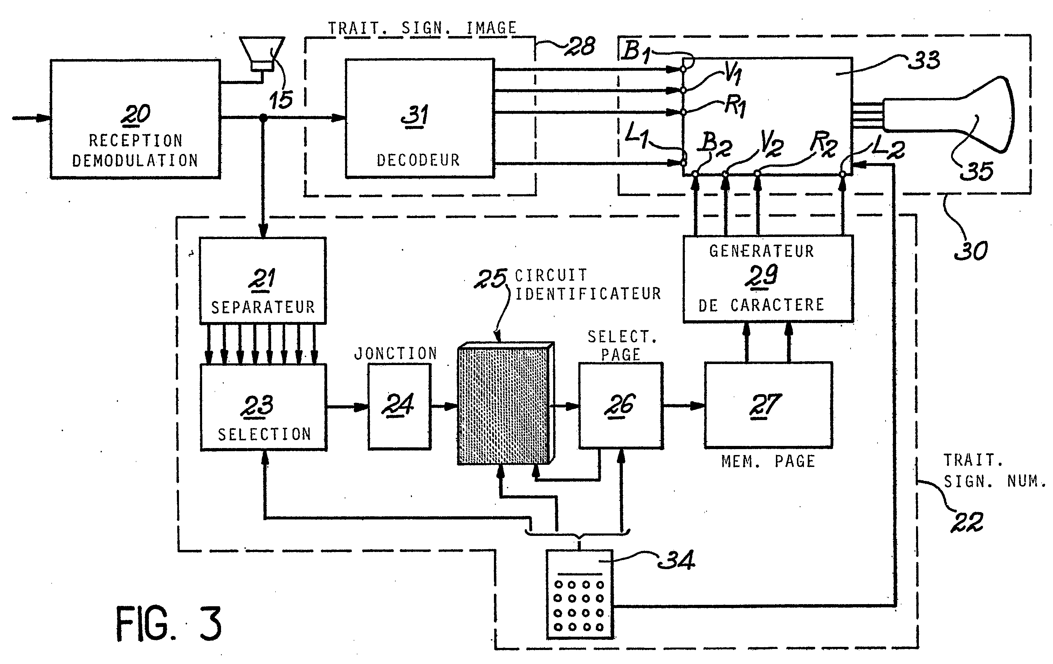

Les figures 2 et 3 permettent de situer les moyens de l'invention dans le système global de vidéographie, tout d'abord dans l'équipement d'émission (Fig. 2) puis dans le récepteur (Fig. 3).

L'ensemble représenté sur la figure 2 est analogue à celui de la figure 1 de la demande de brevet français FR-A-2 313 825, mentionnée ci-dessus. En amont d'un organe de modulation 14 et d'une antenne d'émission 16, peuvent être commutés, par un multiplexeur 12, un certain nombre de sources comprenant un circuit de traitement de données 8 raccordé à des postes de contrôle 6.1, 6.2, etc... Le circuit de traitement de données 8 comprend un circuit de mise au format 7, une mémoire 9 dont l'entrée est reliée à la sortie du circuit 7, dont une sortie de diffusion peut être sélectivement reliée à l'organe de modulation 14, et dont une sortie de contrôle est reliée à l'entrée d'un circuit de traduction 11. Chaque poste de contrôle 6.1, 6.2, etc..., comprend un écran de contrôle 3 et un clavier de composition 5. Chaque clavier a une sortie de données reliée à l'entrée du circuit 7 et une entrée de données reliée à la sortie du circuit 11.

Chaque poste 6.1, 6.2, etc..., permet à un journaliste ou à un opérateur de composer des pages au moyen du clavier 5 en vérifiant, sur l'écran de contrôle 3, toutes les caractéristiques de l'image finale en couleur : taille des caractères, clignotements et particularités graphiques diverses. Chaque clavier 5 est du type machine à écrire et contient les organes logiques pour la composition et la mise à jour de documents. Les données délivrées par les postes 6.1, 6.2, etc..., sont mises au format dans le circuit 7, puis stockées dans la mémoire 9. Cette mémoire peut être une mémoire à disques où sont stockées les suites de codes transmissibles correspondant au langage évoqué plus haut. La mémoire 9 constitue un fichier des pages qui sont lues périodiquement et transmises à l'organe de modulation 14 pour diffusion. Un opérateur d'un poste 6.1, 6.2, etc..., peut également faire apparaître sur son écran de contrôle 3 une page, par l'intermédiaire du circuit 11.

Des exemples de réalisation de l'équipement de la figure 2 sont connus. Ils peuvent être réalisés sous forme de logique câblée, ou sous forme programmée gérée par un microprocesseur.

Comme décrit dans la demande de brevet français 2 313 825 déjà citée, la diffusion des données s'effectue par le canal de télévision dans les lignes affectées au système DIDON. Ces données sont alors regroupées en paquets comportant jusqu'à 32 octets. A un paquet est jointe une étiquette formant un préfixe et donnant l'adresse de l'expéditeur et le nombre d'octets contenus dans le paquet. Si le flux de données comprend plus de 32 octets à transmettre, il est partagé entre plusieurs paquets et l'étiquette comporte en plus le numéro du paquet. A l'étiquette sont encore joints 2 octets pour synchroniser l'oscillateur local du terminal récepteur et un octet de synchronisation des octets du paquet. Ainsi, au total, un paquet transmis comprend 40 octets dont les 320 éléments binaires représentent le noir lorsque leur valeur binaire est 0 et le blanc lorsqu'elle est 1. On minimise les interférences de ces signaux numériques avec le signal vidéo proprement dit en choisissant une fréquence de répétition qui soit un multiple impair de la fréquence ligne. Il y a 397 périodes dans une ligne, ce qui porte la fréquence des éléments binaires à 6,20 MHz, la modulation étant du type non retour à zéro.

La transmission des données s'effectue de manière asynchrone, la structure des paquets n'étant pas répétitive comme on le verra par la suite. Les informations de passe se trouvent alors systématiquement en des positions différentes lors des transmissions successives, ce qui a une importance sur le processus de correction des erreurs éventuelles.

Comme il est déjà décrit dans la demande de brevet précitée, une unité de gestion électronique connaît la liste des lignes libres dans le signal d'image et y insère les paquets de données qu'il reçoit des diverses sources de données telles que l'éditeur décrit à la figure 2. Les liaisons entre la partie modulation 14 et les diverses mémoires 9 comportent une jonction qui est de préférence du type de celle qui est décrite dans la demande de brevet français FR-A-2 268 308 publiée le 14.11.75 et intitulée « dispositif d'interface normalisée de communications ». Cette jonction permet de ralentir le débit d'une source constituée par une mémoire quand le réseau de diffusion est encombré. Quand on utilise un réseau de diffusion, on ne peut asservir le débit de la source à la capacité d'acceptation du récepteur ; pour pallier cette insuffisance, le calculateur gérant est pourvu d'un récepteur fictif analogue au récepteur le plus lent. Si l'on utilise d'autres supports de transmission, la jonction précitée assure les fonctions indispensables à la transmission correcte des signaux.

Les moyens permettant de mettre en œuvre la présente invention se situent dans le circuit 7 de mise au format ; la structure de ce circuit est conforme à celles des circuits déjà utilisés avec cette différence que ce circuit forme les séquences redondantes de codes qui ont été définies plus haut. Le circuit 7 ne sera pas décrit en détail ici et l'on pourra se reporter à son sujet, aux demandes de brevet citées plus haut.

En revanche, des moyens particuliers doivent être insérés dans le terminal de réception pour pouvoir exploiter la redondance du signal émis. La description qui suit s'attache donc essentiellement à la structure et au fonctionnement de ces moyens.

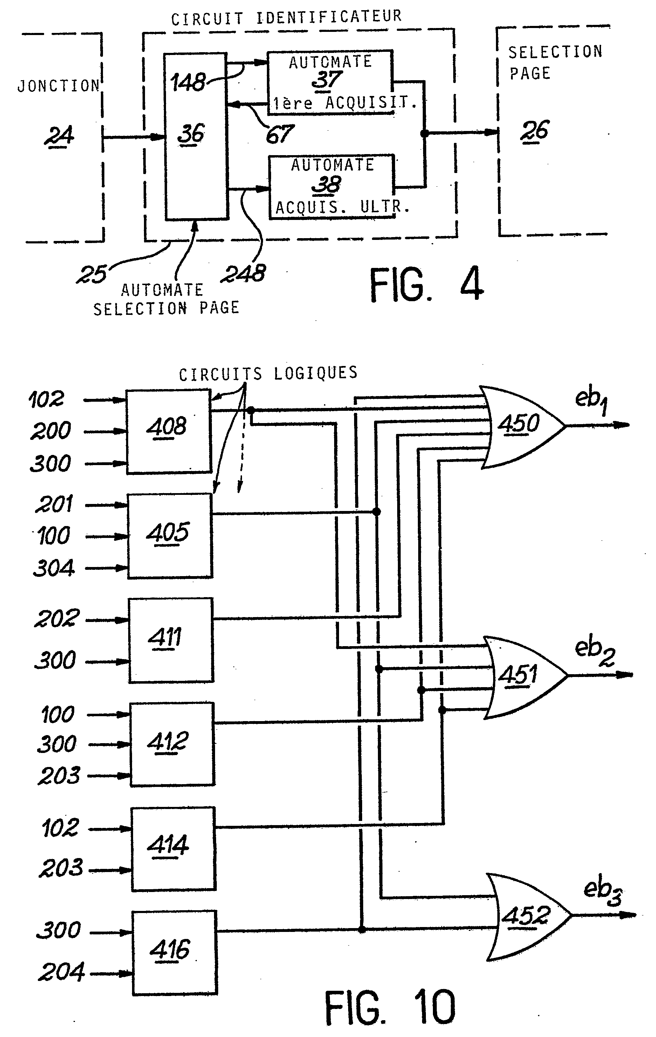

La figure 3, tout d'abord, permet de préciser la place qu'occupent ces moyens dans un poste récepteur ; les figures 4 à 11 préciseront leur structure.

La figure 3 correspond à la figure 2 de la demande de brevet français déjà mentionnée FR-A-2 363 949. Elle représente un récepteur qui comporte des grands blocs fonctionnels déjà mentionnés à propos de la figure 1, à savoir : un circuit de réception et de démodulation 20, une voie 28 de traitement des signaux d'image, une voie 22 de traitement des signaux numériques et un moyen de visualisation 30. Le circuit 20 délivre d'une part, le son à un haut-parleur 15, et d'autre part, le signal vidéo à un décodeur de couleur et générateur de balayage 31. Les signaux de couleur $B_1$, $V_1$ et $R_1$, ainsi que de luminance $L_1$ issus du circuit 31 sont transmis au tube 35 à travers un commutateur vidéo 33.

Le poste récepteur illustré comporte, dans la voie 22 de traitement des signaux numériques, un séparateur vidéo-données 21, qui fonctionne selon la procédure DIDON, et qui extrait les suites d'octets du signal analogique. L'entrée de ce séparateur est reliée à la sortie vidéo du circuit 20 et sa sortie à un circuit de première sélection 23, qui fonctionne lui-aussi selon la procédure DIDON, de manière à extraire les octets véhiculés dans la voie numérique. Ce dernier circuit est semblable à l'équipement terminal décrit dans la demande de brevet FR-A-2 313 825 déjà citée. La sortie du circuit 23 est reliée, par une jonction 24 du type décrit dans la demande de brevet français FR-A-2 268 308 déjà citée, à un circuit sélecteur de page et décodeur de données 26 dont la sortie est reliée à l'entrée d'une mémoire de page 27 (le rôle du circuit 25 est pour l'instant passé sous silence). Un clavier d'abonné 34 est relié aux entrées de commande des blocs 23 et 26 et au commutateur 33. La sortie de la mémoire 27 est reliée à l'entrée d'un générateur de caractères 29. Les sorties du générateur 29 sont reliées aux entrées de couleur $R_2$, $V_2$ et $B_2$ du commutateur vidéo 33, ainsi qu'à une entrée de luminance $L_2$.

Le fonctionnement de ce circuit étant décrit dans la demande FR-A-2 363 949 déjà citée, il ne sera pas réexposé ici. On rappellera simplement qu'à la sortie du circuit DIDON analogique 21, les données sont des octets structurés en paquets enveloppés par une procédure de huit octets d'en-tête, dont trois octets de numéro de voie. Le circuit DIDON numérique 23 sélectionne une voie numérique, c'est-à-dire laisse passer les données utiles des paquets sélectionnés, d'après leur numéro de voie.

La jonction 24 ne joue pas de rôle essentiel dans le système de l'invention, mais est surtout utile pour faciliter la séparation physique au niveau transport (DIDON) et au niveau service (ANTIOPE).

La sélection de page et le décodage des pages sélectionnées sont effectués dans le circuit 26. Cet ensemble décode une page d'information, rangée par rangée, et vient remplir la mémoire de page 27. Cette mémoire peut présenter une capacité de 1 001 mots de 16 éléments binaires (25 rangées de 40 caractères plus un mot de contrôle), chaque caractère étant codé sur 16 éléments binaires en forme et attributs de visualisation.

Ce rappel étant effectué, on peut aborder la question des modifications à apporter à ce récepteur pour pouvoir exploiter la redondance introduite à l'émission dans les séquences de codes de commande. Ces modifications consistent à introduire un circuit identificateur, qui porte la référence 25 sur la figure 3, entre la jonction 24 et le décodeur 26. Pour les postes récepteurs dépourvus de ce circuit identificateur, la jonction 24 est reliée directement au décodeur 26 et la redondance n'est alors pas exploitée.

Les figures suivantes précisent la structure et le fonctionnement de ce circuit identificateur 25. Tel que représenté sur la figure 4, le circuit identificateur comprend :

a) un automate de sélection de page 36 à une entrée, qui reçoit les signaux numériques de la jonction numérique 24 et à deux sorties 148 et 248. Cet automate a pour fonction de reconnaître les codes d'en-tête de page et les numéros de page, et de diriger les signaux numériques d'abord vers la sortie 148 pendant la première acquisition d'une page puis vers la sortie 248 pendant les acquisitions postérieures à la première ;

b) un automate de première acquisition 37, à une entrée reliée à la sortie 148 de l'automate de sélection de page et à une sortie reliée au décodeur numérique 26. Cet automate a pour fonction, d'une part, d'effectuer des corrections sur les codes erronés et de signaler les codes erronés non corrigés et, d'autre part, de reconnaître les codes autres que les codes d'en-tête de page et notamment les codes de fin de page et d'émettre sur une sortie auxiliaire 67 un signal de fin de page ;

c) un automate d'acquisitions ultérieures 38 à une entrée reliée à la sortie 248 de l'automate de sélection de page et à une sortie reliée au décodeur numérique 26. Cet automate a pour fonction d'éliminer progressivement les erreurs subsistant dans la page après la première acquisition, en bloquant tout transfert d'information en cas d'erreur entre une erreur détectée et la séquence de fin de rangée ou de fin de page suivante.

Dans le cas où les erreurs sont causées par des échos et où un code se retrouve à la même position lors de deux transmissions successives, l'étude des corrélations montre que les erreurs sont systématiques et qu'il n'y a aucune chance de corriger la page. En tirant parti du caractère asynchrone de la transmission dans le système ANTIOPE, il y a intérêt à ce que les structures de paquets ne soient pas répétitives ; ainsi, la probabilité pour que le même code se retrouve erroné lors d'une seconde acquisition est extrêmement réduite, ce qui permet de nettoyer progressivement la page des erreurs qu'elle contient.

Ces trois circuits qui composent le circuit identificateur 25 vont maintenant être décrits en détail.

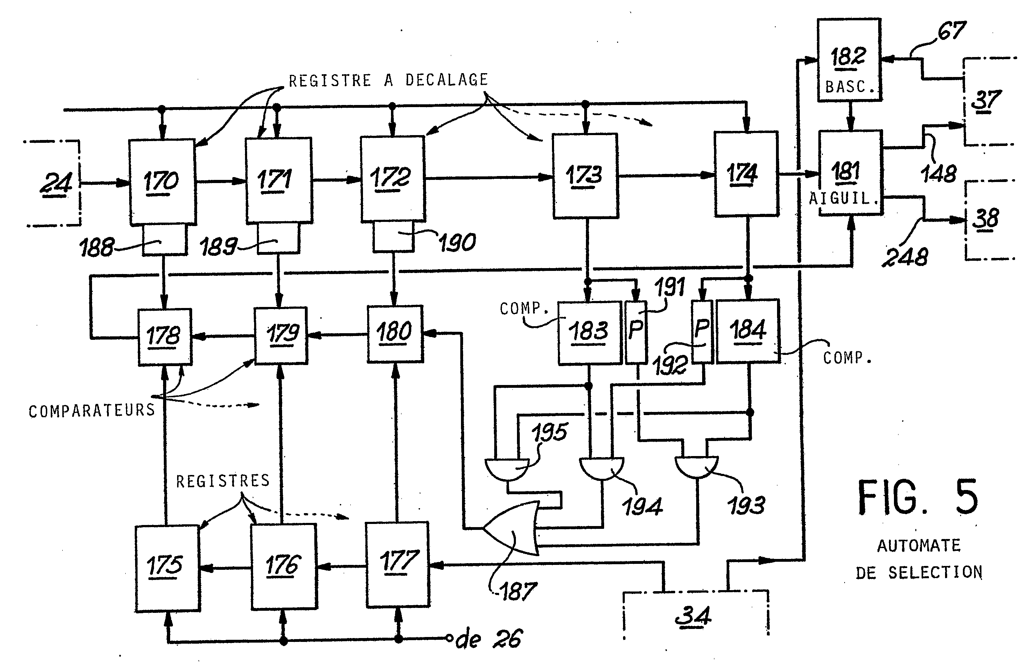

L'automate de sélection, tout d'abord, est illustré par la figure 5. Le circuit représenté est constitué par :

— trois registres 175, 176, 177, aptes à charger trois nombres définissant un numéro de page, ce numéro étant délivré par le décodeur 26,

— un registre à décalage à cinq cellules 170, 171, 172, 173 et 174, la première cellule recevant les signaux délivrés par la jonction 24,

— deux comparateurs 183 et 184 reliés aux deux dernières cellules 173 et 174 du registre à décalage et aptes à comparer le contenu de celles-ci aux codes de début de page RS et SOH ; ces deux comparateurs sont associés à deux détecteurs de parité respectivement 191 et 192,

— 3 portes ET respectivement 193, 194 et 195 à deux entrées reliées respectivement aux sorties des comparateurs 183 et 184 et aux sorties des détecteurs de parité 191 et 192,

— une porte OU 187 à trois entrées réunies aux sorties des portes ET 193, 194 et 195 ; cette porte valide trois comparateurs 178, 179 et 180 reliés d'une part aux trois premières cellules 170, 171, 172 par l'intermédiaire de trois correcteurs-détecteurs de code de Hamming 188, 189 et 190 et, d'autre part, aux trois registres 175, 176 et 177,

— un aiguilleur 181 relié à la sortie du registre à décalage et commandé par les trois comparateurs 178, 179 et 180, cet aiguilleur possédant deux sorties 148 et 248,

— une bascule 182 possédant une sortie reliée à l'aiguilleur 181 et une première entrée reliée à la sortie 67 de l'automate de première acquisition 37 et une seconde entrée reliée au clavier 34.

Le fonctionnement de l'automate de sélection de page est le suivant. Les registres à décalage 170 à 174, reçoivent les données sortant de la jonction numérique 24. Le contenu de 173 est comparé en permanence au mot RS par le comparateur 183 tandis que 184 compare en permanence le contenu de 174 au mot SOH. Dès que l'une ou l'autre des combinaisons (X ; RS), (SOH ; X) ou (SOH ; RS) apparaît, la porte 187 valide les comparateurs 178 à 180. Ceux-ci comparent aux nombres contenus dans les registres 175 à 177 le contenu des registres 170 à 172, corrigés par les correcteurs-détecteurs de code de Hamming 188 à 190. Si la comparaison est positive, l'aiguilleur 181 est validé. Cet aiguilleur est commandé par la bascule 182. Cette bascule est remise à zéro par un signal provenant du clavier 34 et chargeant les bascules 175 à 177 ou indiquant que la page vient d'être mise à jour. Cette bascule est mise à « 1 » par un signal véhiculé par la connexion 67 venant de 37, indiquant la fin de la première acquisition. Tant que la bascule 182 est à « 0 », le circuit 181 aiguille le signal de sortie vers la connexion 148. Lorsque la bascule passe à « 1 », le signal de sortie est aiguillé vers la connexion 248.

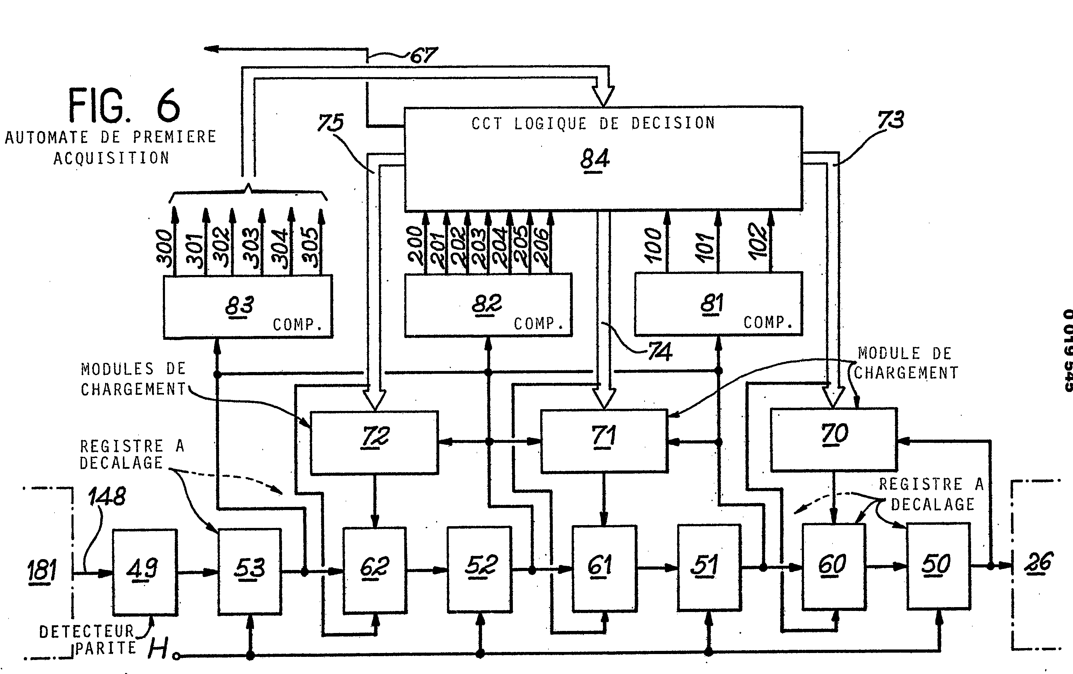

Le deuxième circuit constituant l'identificateur est l'automate de première acquisition. Tel qu'il est représenté sur la figure 6, cet automate est constitué par :

— un détecteur de parité 49, dont l'entrée est reliée à la sortie 148 de l'aiguilleur 181 de l'automate de sélection de page,

— un registre à décalage relié au détecteur de parité 49 et formé de 4 cellules de mémorisation 50, 51, 52 et 53, les impulsions d'horloge commandant ce registre provenant de la jonction 24,

— un organe d'aiguillage composé de trois aiguilleurs 60, 61 et 62 à une sortie et deux entrées, l'une des entrées étant reliée à la mémoire qui précède et la sortie à la mémoire qui suit,

— trois comparateurs 81, 82 et 83 contenant les codes en vigueur dans toutes les séquences de commande, c'est-à-dire respectivement les codes RC pour 81, les codes ETX, LF, ESC pour 82, et les codes EOT, US, ETX, ESC, RC, SS2 (de valeur hexadécimale 1 C) pour 83 ; ces comparateurs ont leurs entrées respectivement reliées à la sortie des mémoires 51, 52 et 53,

— un circuit logique de décision 84 relié auxdits comparateurs 81, 82 et 83 et délivrant des signaux de commande 73, 74 et 75,

— trois modules de chargement 70, 71 et 72, commandés par les signaux 73, 74 et 75.

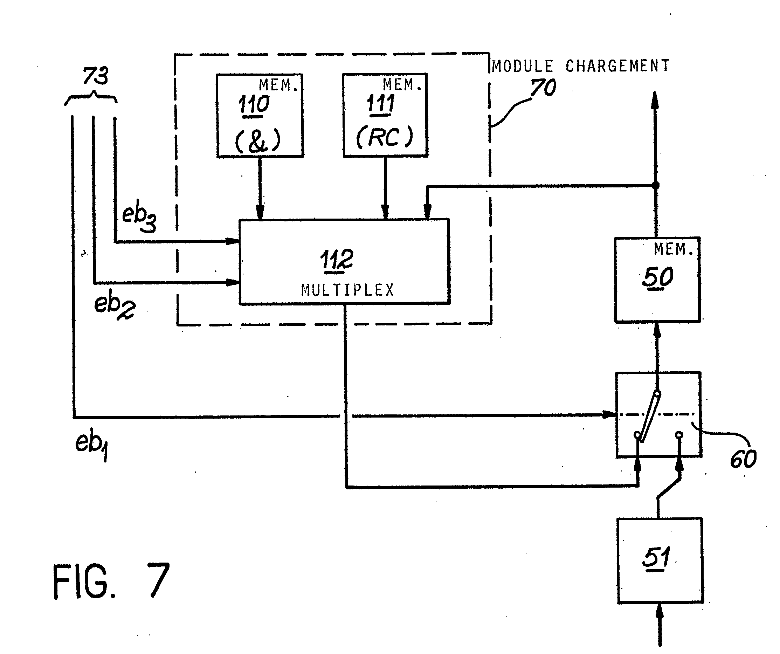

Les trois modules de chargement 70, 71 et 72 sont représentés de façon détaillée sur les figures 7, 8 et 9 avec leur liaison aux aiguilleurs 60, 61 et 62 et avec leur signaux de commande 73, 74 et 75.

Le module de chargement 70, illustré sur la figure 7, comprend une mémoire 110 contenant un code d'erreur noté &, une mémoire 111 contenant le code RC et un multiplexeur 112 à trois entrées reliées aux mémoires 110 et 111 et à la mémoire 50. Ce multiplexeur est commandé par les deux éléments binaires $eb_2$ et $eb_3$ de poids fort du signal 73, le premier élément binaire de ce signal, soit $eb_1$, commandant l'état de l'aiguilleur 60. Ce dernier a l'une de ses entrées reliée à la sortie du multiplexeur 112 et l'autre à la sortie de la mémoire 51.

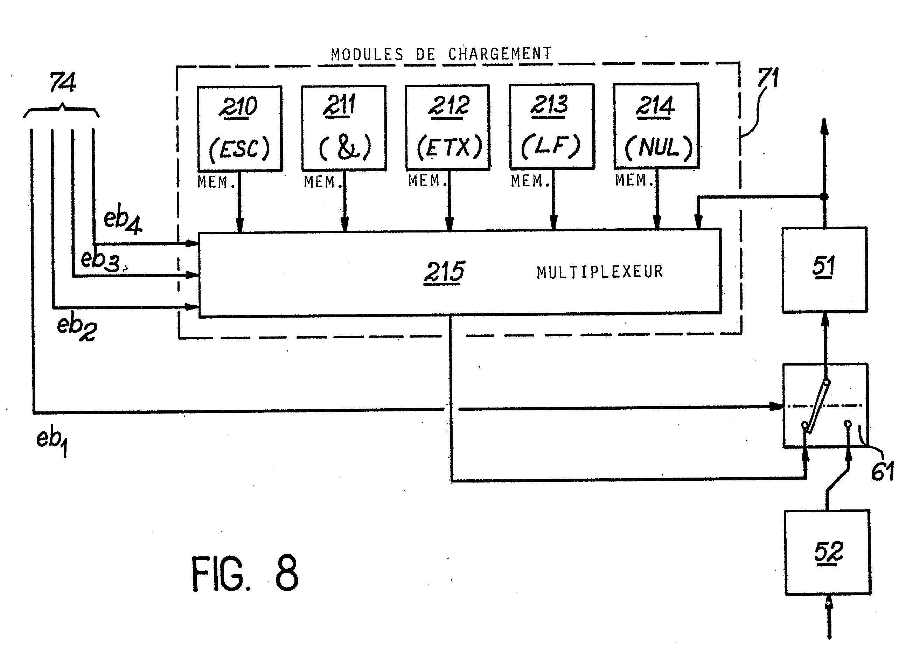

Le module de chargement 71, représenté sur la figure 8, comprend une mémoire 210 contenant le code ESC, une mémoire 211 contenant le code ETX, une mémoire 213 contenant le code LF, une mémoire 214 contenant le code NUL et un multiplexeur 215 à six entrées reliées aux mémoires 210 à 214 et à la mémoire 51. Ce multiplexeur est commandé par les trois éléments binaires $eb_2$, $eb_3$ et $eb_4$ de poids fort du signal 74, le premier élément binaire de ce signal, soit $eb_1$, commandant l'état de l'aiguilleur 61. Ce dernier a l'une de ses entrées reliée à la sortie du multiplexeur 215 et l'autre à la sortie de la mémoire 52.

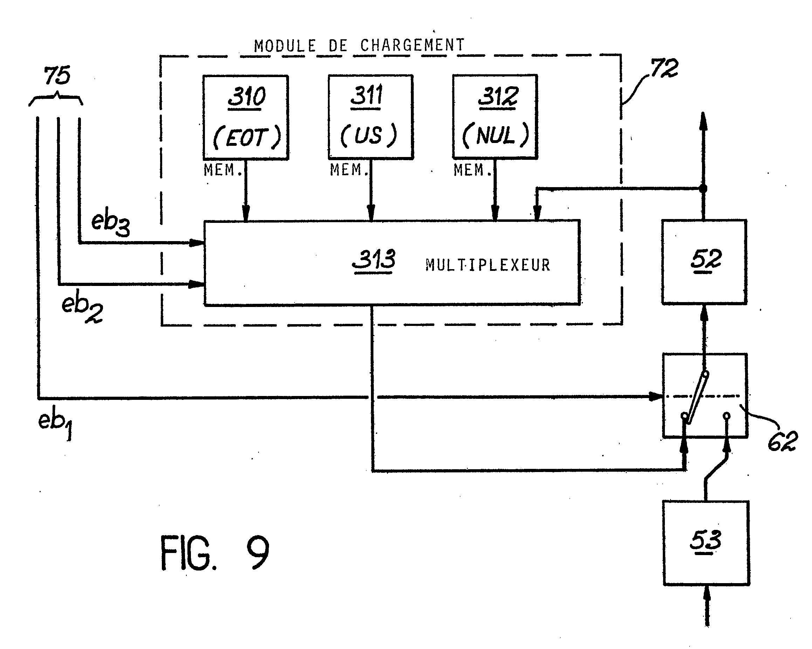

Enfin, le module de chargement 72, représenté sur la figure 9, comprend une mémoire 310 contenant le code EOT, une mémoire 311 contenant le code US, une mémoire 312 contenant un code de bourrage par exemple le code NUS et un multiplexeur 313 à quatre entrées reliées aux mémoires 310 à 312 et à la mémoire 52. Ce multiplexeur est commandé par deux éléments binaires $eb_2$ et $eb_3$ de poids fort du signal 75, le premier élément binaire de ce signal, soit $eb_1$, commandant l'état de l'aiguilleur 62. Ce dernier a l'une de ses entrées reliée à la sortie du multiplexeur 313 et l'autre à la sortie de la mémoire 53.

La mémoire 312 peut être remplacée par un circuit annulant l'impulsion d'horloge commandant les mémoires 50 à 52, ce qui a pour effet de supprimer la sortie de caractères erronés concernée.

Le fonctionnement de l'automate de première acquisition est le suivant. Le signal issu du sélecteur de page 36 et véhiculé par la connexion 148 est introduit dans le détecteur de parité 49. Ce détecteur ajoute un 9e élément binaire de validité aux octets qu'il reçoit et ces 9 éléments binaires transitent par la série de mémoires 50 à 53 montées en registre à décalage, et par les aiguilleurs 60 à 62. Chaque aiguilleur choisit, sous la commande du signal qui lui est associé, entre le contenu de la mémoire qui le précède et le contenu du module de chargement ; il dirige ensuite le contenu choisi vers la mémoire qui le suit. Ainsi, la mémoire 50 reçoit le contenu de la mémoire 51, ou celui du registre 70 selon l'état de l'aiguilleur 60.

Le contenu des mémoires 51 à 53 est contrôlé par les comparateurs 81 à 83. Les tests effectués par ces comparateurs sont rassemblés dans le tableau I ci-après. Ils sont au nombre de 16.

Les 16 résultats sont traités dans la logique de décision 84, qui est une logique combinatoire d'où sortent les trois signaux 73, 74 et 75. Le premier élément binaire de chacun de ces signaux est généralement à zéro et dans ce cas, les aiguilleurs 60, 61 et 62 sont en position telle que les mémoires 50 à 53 fonctionnent en registre à décalage. Si tel n'est pas le cas, par exemple si le premier élément binaire

**0 019 545**

de 75 est égal à 1, l'aiguillage 62 laisse passer vers 52 le contenu d'une des mémoires contenues dans le registre 72 et adressées par les autres éléments du signal 75.

La logique de décision 84 est une logique combinatoire dont il suffit de donner, en fonction des 16 valeurs des signaux d'entrée, les signaux de sorties correspondants, ce qui est résumé dans le tableau II ci-après.

On notera que le code US étant suivi d'un numéro de rangée sur 2 chiffres, l'automate 84 est bloqué pendant deux temps d'horloge par un compteur après détection du signal 303, et que les signaux 302 ou 202 provoquent l'envoi du signal sur la connexion 67, provoquant la remise à zéro de la bascule 182 et indiquant la fin d'acquisition d'une page.

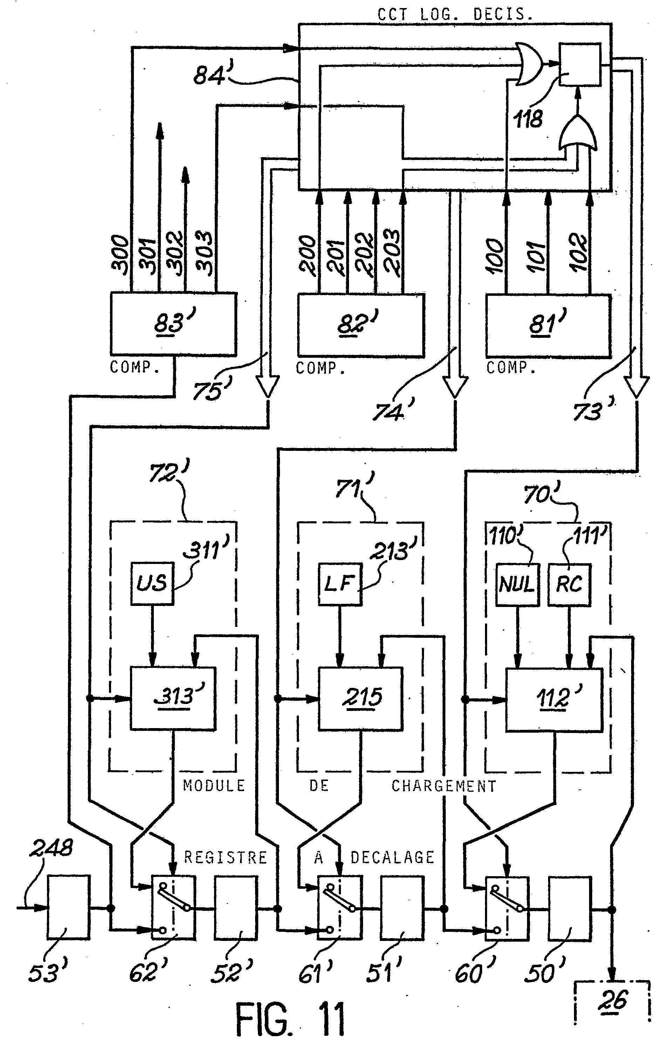

Le schéma de la figure 10 illustre un exemple de réalisation d'un circuit logique permettant d'élaborer le signal 75. Il s'agit donc d'un sous-ensemble de la logique 84. Le circuit représenté effectue des tests sur les signaux qu'il reçoit et délivre trois éléments binaires $eb_1$, $eb_2$ et $eb_3$, le premier définissant l'état de l'aiguilleur 62 et les deux autres l'état du multiplexeur 313 du module de chargement 72 (voir figure 9). Le circuit de la figure 10 comprend, d'une part, des circuits logiques 405, 408, 411, 412, 414 et 416 qui effectuent les opérations logiques correspondantes indiquées dans le tableau II et, d'autre part, trois portes logiques OU : 450, 451 et 452, la première délivrant $eb_1$ et les deux autres $eb_2$ et $eb_3$. Le tableau III résume les tests effectués par le sous-ensemble de la figure 10 et précise la valeur des éléments binaires du signal 75 et l'adresse qui leur correspond.

Les circuits permettant d'élaborer les signaux 73 et 74 sont analogues à celui de la figure 10 et ne seront donc pas décrits.

L'automate 38 des acquisitions postérieures à la première, est très semblable à l'automate 37 de première acquisition, à ceci près, qu'il ne détecte que les séquences de début de rangée RC, LF, US et qu'il bloque tout transfert d'information, en cas d'erreur, entre l'erreur détectée et la détection d'une séquence de fin de rangée ou de page.

Le schéma synoptique de cet automate est donné sur la figure 11 où les références numériques correspondent à celles de la figure 6, mais affectées d'une prime.

On notera dans ce schéma, que la mémoire 110' du module de chargement 70' contient un code de bourrage par exemple le code NUL au lieu du code d'erreur visualisable comme dans le module correspondant à l'automate de première acquisition et que la mémoire 213' est unique dans le module 71' ainsi que la mémoire 311' dans le module 72'. Comme plus le bourrage peut être remplacé par une inhibition de la sortie.

Les tests effectués par les comparateurs de l'automate des acquisitions ultérieures sont moins nombreux que ceux des comparateurs correspondant de l'automate de première acquisition. Ils sont rassemblés dans le tableau IV ci-après.

La logique de décision 84', quant à elle, effectue des tests 407, 408, 412, 413, 414 et 415 qu'on trouvait déjà dans les tests de la logique 84 de l'automate de première acquisition. Le tableau V rassemble les états logiques correspondant à ces tests, indique quels sont des trois signaux 73', 74' et 75', ceux qui sont validés, donne les adresses correspondantes dans les modules de chargement et précise le code adressé.

La logique de décision 84' contient en outre, une bascule 118 mise à « 1 » par les résultats des tests 100, 200 ou 300 et mise à zéro par 102, 203 ou 303, qui ont une action prioritaire. Le signal issu de cette bascule valide 73' avec l'adresse de 110' qui contient le code NUL, ce qui permet d'annuler tous les codes compris entre la détection d'une erreur et la détection d'une synchronisation de rangée.

Naturellement, tous les circuits qui viennent d'être décrits peuvent être réalisés à l'aide d'un microprocesseur qui accomplirait les mêmes fonctions et aboutirait au même résultat, et cela aussi bien à l'émission qu'à la réception, ce mode particulier de réalisation entrant dans le cadre des équivalences.

En outre, ils ont été décrits dans le cas de codes représentant des fonctions de commande pour l'écriture de codes alphanumériques. Ils peuvent être multipliés et d'autres circuits analogues s'appliquent à d'autres fonctions graphiques et la description qui a été faite s'étend à d'autres séquences de codes, telles que les codes permettant de passer d'un mode « caractère » à un mode « vectoriel », (dit aussi géométrique) ou « point à point » (dit aussi fac simili, télécopie ou photographique). A l'intérieur de ces modes, la succession des codes peut également être structurée de manière à ce que les circuits décrits soient utilisables, au changement près des valeurs assignées aux comparateurs ou aux modules de chargement, la logique de décision étant adaptée en conséquence. Chaque mode (alphabétique, géométrique, photographique) nécessite un ensemble complet tel que décrit où seules changent les valeurs particulières telles que données dans les tableaux I à V.

(Voir Tableaux, pages suivantes)

10

**0 019 545**

Tableau I

Tests effectués par les comparateurs de l'automate de première acquisition

| Compa-rateur | N° du test | Opérations effectuées |
|---|---|---|
| 81 | 100 | eb d'invalidité |
| | 101 | Comparaison du contenu de 51 à celui de 52 à un eb près |
| | 102 | Comparaison à RC |
| 82 | 200 | eb d'invalidité |
| | 201 | Comparaison au contenu des mémoires 50 ou 51 |
| | 202 | Comparaison à ETX |
| | 203 | Comparaison à LF |
| | 204 | Comparaison à ESC |
| | 205 | Comparaison à ESC à un eb près |
| | 206 | Comparaison à 0 des eb 6 et 7 |
| 83 | 300 | eb d'invalidité |
| | 301 | Comparaison à 1 du $7^e$ eb et à 0 du $6^e$ |
| | 302 | Comparaison à EOT |
| | 303 | Comparaison à US |
| | 304 | Comparaison au contenu de la mémoire 52 à un eb près |
| | 305 | Comparaison à ETX, ou ESC, ou RC ou SS2 |

Tableau II

Logique de décision

| Opérations | Conditions et effets |
|---|---|
| 401 | 200, 205, 301 égaux à 1 simultanément entraînent la validation de 74 avec l'adresse de 210 |
| 402 | 200 et 301 égaux à 1 et 205 égal à 0, ainsi que |
| 403 | 200 et 305 égaux à 1, ou |
| 404 | 203 égal à 1 et 100 ou 300 nul, ou |
| 405 | 201 égal à 1, 100 nul ainsi que 304, valident 74 avec l'adresse de 211 |
| | Le dernier cas valide également 75 avec l'adresse correspondant au contenu de 52 |
| 406 | 200 et 302 égaux à 1 valident 74 avec l'adresse de 212 |
| 407 | 102, 200 et 303 égaux à 1 valident 74 avec l'adresse de 213 |
| 408 | 102, 200 et 300 égaux à 1 valident 74 et 75 respectivement avec l'adresse de 213 et celle de 311 |
| 409 | 100, 101 et 201 égaux à 1 valident 73 avec l'adresse correspondant au contenu de 52 |
| 410 | 100 et 201 égaux à 1 mais 101 nul valident 73 avec l'adresse de 110 |

11

# 0 019 545

(Tableau II, suite)

| Opérations | Conditions et effets |
|---|---|
| 411 | 202 et 300 égaux à 1 valident 75 avec l'adresse de 310 |
| 412 | 100, 300 et 203 valident 73 et 75 respectivement avec les adresses de 111 et de 311 |
| 413 | tandis que 303, 203 égaux à 1 avec 100 nul, valident 73 avec l'adresse de 111 |
| 414 | 102 et 203 égaux à 1 valident 75 avec l'adresse de 311 |
| 415 | 102 égal à 1, 200, 203, 303 nuls valident 73 avec l'adresse de 110 |
| 416 | 300 et 204 égaux à 1 valident 74 et 75 avec les adresses de 214 et 312 respectivement. |

Tableau III

Logique de décision = formation du signal 75

(figure 10)

| N° du test | Etats logiques des signaux d'entrée | Signal 75 | | Adresse dans le multiplexeur 313 de 72 |
|---|---|---|---|---|
| | | $eb_2$ | $eb_3$ | |
| 405 | 201 = 1 <br> 100 = 0 <br> 304 = 0 | 1 | 1 | 52 |
| 408 | 102 = 1 <br> 200 = 1 <br> 300 = 1 | 1 | 0 | 311 |
| 411 | 202 = 1 <br><br> 300 = 1 | 0 | 0 | 310 |
| 412 | 100 = 1 <br> 300 = 1 <br> 203 = 1 | 1 | 0 | 311 |
| 414 | 102 = 1 <br><br> 203 = 1 | 1 | 0 | 311 |
| 416 | 300 = 1 <br><br> 204 = 1 | 0 | 1 | 312 |

12

## Tableau IV

Tests effectués par les comparateurs de l'automate des acquisitions ultérieures

| N° de test | Opération |
|---|---|
| 102 | Comparaison du contenu de 51' à RC |
| 203 | Comparaison du contenu de 52' à LF |
| 303 | Comparaison du contenu de 53' à US |
| 100 | eb d'invalidité de l'octet contenu dans 51' |
| 200 | eb d'invalidité de l'octet contenu dans 52' |
| 300 | eb d'invalidité de l'octet contenu dans 53' |

## Tableau V

Logique de décision de l'automate des acquisitions ultérieures

| Test effectué | Etats logiques | Signal de validation | Module de chargement commandé | Adresse dans le module | Code correspondant à l'adresse |
|---|---|---|---|---|---|
| 407 | 102 = 1<br>200 = 1<br>303 = 1 | 74' | 71' | 213' | LF |
| 408 | 102 = 1<br>200 = 1<br>300 = 1 | 74'<br>et 75 | 71<br>72' | 213'<br>311' | LF<br>US |
| 412 | 100 = 1<br>300 = 1<br>203 = 1 | 73'<br>et 75' | 70'<br>72' | 111'<br>311' | RC<br>US |
| 413 | 303 = 1<br>203 = 1<br>100 = 0 | 73' | 70' | 111' | RC |
| 414 | 102 = 1<br>203 = 1 | 75' | 72' | 111' | RC |
| 415 | 102 = 1<br>200 = 0<br>203 = 0<br>303 = 0 | 73' | 70' | 110' | NUL |

# 0 019 545

**Revendications**

1. Procédé de protection contre les erreurs de transmission dans un système de vidéographie asynchrone et de format variable, dans lequel, dans un centre d'émission :

— on compose un magazine constitué de pages organisées en rangées de caractères,

— on code ces caractères en signaux numériques groupés en octets de données (8 éléments binaires) et on forme des octets de commande, à 6e et 7e éléments binaires nuls, constitués de codes indiquant notamment des en-têtes et des fins de pages, des en-têtes et des fins de rangées, ainsi que des attributs de visualisation, ces octets de commande étant protégés par un codage de Hamming, tous ces octets de commande et de données comprenant un élément binaire de poids fort qui est un élément d'imparité, on mémorise le magazine sous forme d'octets de données insérées entre des octets de commande,

— on insère tous ces signaux dans les lignes d'un signal de télévision, et dans lequel, dans des postes de réception :

— on reçoit ledit signal de télévision,

— on traite les signaux numériques reçus et on les adresse à un décodeur,

— on traite les signaux vidéo d'image reçus,

— on commande un organe de visualisation avec ces signaux traités,

ce procédé étant caractérisé en ce que :

A) dans le centre d'émission :

— on forme des signaux de commande constitués, pour chaque commande, d'une séquence redondante d'octets, chaque séquence étant formée d'au moins deux octets consécutifs dont l'un au moins est l'octet représentant le code habituel correspondant à la commande en question et le (ou les) autre(s) octets n'ayant aucune signification susceptible de perturber les récepteurs habituels et représentant un code redondant,

B) dans certains des postes récepteurs :

— on vérifie la parité de chaque octet (un octet invalide au point de vue parité étant noté X),

— on compare chaque octet aux différents codes de commande habituels et redondants (un octet valide du point de vue parité, mais n'appartenant pas à la séquence en cours, étant noté Z) et,

— on corrige ou on signale au décodeur, selon le cas, les séquences erronées, ces opérations de correction et de signalisation étant effectuées de la manière suivante :

— dans le cas d'une séquence de deux codes ;

a) si les deux codes sont reconnus, on renvoie le code habituel au décodeur,

b) si un code est reconnu, l'autre étant X, on corrige la séquence, le code reconnu étant considéré comme suffisant à la reconnaissance de la séquence, et on envoie le code habituel au décodeur,

c) si un code est reconnu, l'autre étant Z, on envoie un signal d'erreur au décodeur,

— dans le cas d'une séquence de trois codes :

a) si les trois codes sont reconnus ou si la séquence comporte un X, un Z ou deux X, on corrige la séquence pour le ou les codes reconnus suffisants pour la correction, et on envoie le code habituel au décodeur,

b) si la séquence comporte trois codes X ou un code X plus un code Z, un signal d'erreur est envoyé au décodeur, la séquence ne pouvant être corrigée,

— dans le cas d'une séquence de quatre codes formée de deux codes doublés, un des codes étant un code d'échappement ESC et l'autre un code Y spécifiant un attribut de visualisation :

a) si les quatre codes sont reconnus ou si la séquence comporte un code X, on envoie le code habituel au décodeur,

b) si la séquence comporte deux codes X ou un code Z, on envoie un signal d'erreur au décodeur,

c) pour les séquences de deux codes non doublés, on reconnaît les séquences (X, Y) où X diffère du code d'échappement ESC par un seul élément binaire et on l'indique au décodeur.

2. Procédé selon la revendication 1, caractérisé en ce que, un début de page étant repéré par le code habituel de drapeau de page noté RS :

A) dans l'émetteur, on constitue, pour chaque début de page, une séquence de deux codes : le code RS, précédé d'un code redondant n'ayant aucune signification, par exemple le code SOH, la séquence s'écrivant alors (SOH ; RS) ;

B) dans certains récepteurs :

— on reconnaît des séquences telles que :

(SOH ; RS), (X ; RS), (SOH ; X)

et on restitue dans les trois cas au décodeur le code habituel de drapeau page RS,

— on reconnaît qu'il y a erreur dans des séquences telles que :

14

## 0 019 545

(X ; X), (Z ; RS), (SOH ; Z)

et on l'indique au décodeur.

3. Procédé selon la revendication 1, caractérisé en ce que, une fin de page étant repérée par le code habituel noté ETX :

A. dans l'émetteur, on constitue, pour chaque fin de page, une séquence de deux codes : le code ETX suivi d'un code redondant n'ayant aucune signification, par exemple le code EOT,

B. dans certains récepteurs :
— on reconnaît des séquences telles que :

(ETX ; EOT), (ETX ; X), (X ; EOT),

et on délivre, dans les trois cas, au décodeur le code habituel de fin de page ETX,
— on reconnaît qu'il y a erreur dans des séquences telles que :

(X ; X), (Z ; EOT), (ETX ; Z)

et on l'indique au décodeur.

4. Procédé selon la revendication 1, caractérisé en ce que, la synchronisation de rangée étant repérée, soit par le code habituel de retour chariot RC suivi du code de saut de ligne LF, soit par le code de drapeau de rangée US, suivi de numéro de rangée,

A. dans l'émetteur, on constitue, pour chaque début de rangée, une séquence des trois codes (RC ; LF ; US),

B. dans certains récepteurs :
— on reconnaît les séquences :

| | |
|---|---|
| (RC ; LF ; US) | (RC ; X ; X) |
| (X ; LF ; US) | (X ; LF ; X) |
| (RC ; X ; US) | (Z ; LF ; US) |
| (RC ; LF ; X) | (RC ; Z ; US) |
| (X ; X ; US) | (RC ; LF ; Z) |

et on délivre, dans les dix cas, au décodeur le code habituel de début de rangée,
— on reconnaît qu'il y a erreur dans les séquences qui contiennent (X ; X ; X) ou « X et Z » et on l'indique au décodeur.

5. Procédé selon la revendication 1, caractérisé en ce que, un attribut de visualisation de caractère étant repéré par un code d'échappement ESC suivi d'un second code Y spécifiant l'attribut,

A. dans l'émetteur, on forme, pour certains attributs de visualisation, une séquence de quatre codes : le code ESC suivi du code Y, le tout doublé, soit (ESC ; Y ; ESC ; Y),

B. dans certains des récepteurs :
— on reconnaît les séquences

(ESC ; Y ; ESC ; Y)
(ESC ; X ; ESC ; Y)
(ESC ; Y ; X ; Y)
(X ; Y ; ESC ; Y)

et on délivre dans les quatre cas, au décodeur, le code habituel (ESC ; Y),
— on reconnaît qu'il y a erreur dans des séquences telles que :

| | |
|---|---|
| (X ; X ; ESC ; Y) | (ESC ; X ; X ; Y) |
| (X ; Y ; X ; Y) | (Z ; Y ; ESC ; Y). |
| (ESC ; Z ; ESC ; Y) | (ESC ; Y ; Z ; Y) |

et on l'indique au décodeur,

C. pour les séquences (ESC ; Y) non doublées, on reconnaît des séquences (X, Y) où X diffère de ESC par un seul élément binaire et on l'indique au décodeur.

6. Procédé selon l'une quelconque des revendications 1 à 5, caractérisé en ce que, dans l'émetteur, on positionne systématiquement les informations de page en des positions différentes lors de transmissions successives.

7. Récepteurs de vidéographie mettant en œuvre le procédé de la revendication 1, et comprenant :
— un circuit 20 de réception et de démodulation d'un signal de télévision,
— une voie 22 de traitement de signaux numériques, cette voie contenant notamment une jonction numérique 24 suivie d'un décodeur 26 de signaux numériques,
— une voie 28 de traitement de signaux vidéo d'image,
— un organe de visualisation 30,
caractérisé en ce qu'il comprend, dans la voie 22 de traitement, des signaux numériques et entre la jonction 24 et le décodeur 26 un circuit identificateur 25 comprenant :

a) un automate de sélection de page 36 à une entrée qui reçoit les signaux numériques de la jonction numérique 24 et à deux sorties 148 et 248, cet automate ayant comme fonction de reconnaître des codes d'en-tête de page et des numéros de page et de diriger les signaux numériques d'abord vers la sortie 148 pendant la première acquisition d'une page puis vers la sortie 248 pendant les acquisitions postérieures à la première,

b) un automate de première acquisition 37 à une entrée reliée à la sortie 148 de l'automate de sélection de page 36 et à une sortie reliée au décodeur numérique 26, cet automate ayant pour fonction, d'une part, de reconnaître les codes autres que d'en-tête de page et de détecter notamment le code de fin de page et d'émettre par une sortie auxiliaire 67 un signal de fin de page et, d'autre part, d'effectuer des corrections sur les codes erronés et de signaler les codes erronés non corrigés,

c) un automate d'acquisitions ultérieures 38 à une entrée reliée à la sortie 248 de l'automate de sélection de page 24 et à une sortie reliée au décodeur numérique 26, cet automate ayant pour fonction d'éliminer progressivement les erreurs subsistant dans la page après la première acquisition, en bloquant tout transfert d'information en cas d'erreur entre une erreur détectée et la séquence de codes de fin de rangée et de fin de page qui suit.

8. Récepteur selon la revendication 7, caractérisé en ce que l'automate de sélection de page est constitué par :
— trois registres de chargement 175, 176 et 177, de trois nombres définissant un numéro de page,
— un registre à décalage à cinq cellules, 170 à 174,
— deux comparateurs 183 et 184 reliés aux deux dernières cellules du registre à décalage et aptes à comparer le contenu de celles-ci aux codes de début de page RS et SOH,
— deux détecteurs de parité 191 et 192,
— trois portes ET 193, 194 et 195 à deux entrées reliées aux comparateurs 183-183 et aux détecteurs de parité 191-192,
— une porte OU 187 à trois entrées réunies aux sorties des portes ET 193, 194 et 195, cette porte validant trois comparateurs 178, 179 et 180 reliés d'une part aux trois premières cellules 170, 171 et 172 du registre à décalage et, d'autre part, aux trois registres 175, 176 et 177,
— un aiguilleur 181, relié à la sortie du registre à décalage et commandé par les trois comparateurs 178, 179 et 180, cet aiguilleur possédant deux sorties 148 et 248,
— une bascule 182 reliée à l'aiguilleur 181.

9. Récepteur selon la revendication 7, caractérisé en ce que l'automate de première acquisition est constitué par :
— un détecteur de parité 49 dont l'entrée est reliée à la sortie 148 de l'aiguilleur 181 de l'automate de sélection de page,
— un registre à décalage à plusieurs mémoires 50, 51, 52, 53 relié au détecteur de parité 49,
— trois aiguilleurs 60, 61, 62 intercalés entre les mémoires, ces aiguilleurs ayant une sortie reliée à la mémoire qui suit et deux entrées dont l'une est reliée à la mémoire qui précède,
— trois comparateurs 81, 82 et 83, contenant les codes en vigueur dans toutes les séquences de commande, ces comparateurs ayant leurs entrées reliées à la sortie des mémoires 51 à 53, et effectuant les comparaisons entre les codes reçus et les codes en vigueur,
— un circuit logique de décision 84 relié auxdits comparateurs et délivrant, en fonction des résultats des comparaisons, des signaux de commande 73, 74 et 75,
— trois modules de chargement 70, 71 et 72 contenant les codes de commande et un code d'erreur, ces modules étant commandés respectivement par les signaux 73, 74 et 75, les aiguilleurs 60, 61 et 62 prélevant, soit les codes stockés dans la mémoire qui précède si ceux-ci sont identiques aux codes en vigueur, soit les codes enregistrés dans le module de chargement auxquels ils sont reliés si les codes reçus sont entachés d'erreurs légères, soit un code d'erreur prélevé dans un module de chargement si les codes reçus sont entachés d'erreurs graves.

10. Récepteur selon la revendication 7, caractérisé en ce que l'automate de seconde acquisition est de constitution analogue à l'automate de première acquisition selon la revendication 8, à la différence qu'aux lieu et place d'un symbole d'erreur visualisable, un code de bourrage par exemple le code NUL est mémorisé dans le module de chargement où celui-ci inhibe la sortie des caractères erronés correspondants.

11. Récepteur selon l'une quelconque des revendications 7 à 10, caractérisé en ce qu'il comprend un microprocesseur pour effectuer les opérations de reconnaissance de codes et de corrections des codes erronés.

**Claims**

1. Process for protection against transmission errors in a variable-format asynchronous videographic system, wherein at a transmission station :
— a magazine is composed comprising pages organized into arrays of characters,
— these characters are encoded into digital signals grouped into data octets (8 binary elements), with formation of command octets, having null 6th and 7th binary elements, comprising codes indicating especially the beginnings and endings of pages, the beginnings and endings of arrays, and graphics characters, said command octets being protected by Hamming code, all said command and data octets having a most significant binary element which is an imparity element, the magazine being memorized in the form of data octets sandwiched between command octets,
— all the signals are inserted into the lines of a television signal,
and wherein, at receiving stations,
— said television signal is received,
— the digital signals received are treated and addressed to a decoder,
— the video image signals received are treated, and
— a display unit is commanded by the treated signals,
said process being characterized in that :

A. at the transmission station :
— command signals are formed comprising a redundant octet sequence for each command, each sequence being formed from at least two consecutive octets, at least one of which is an octet representing the normal code corresponding to the command in question, the other octet or octets having no significance capable of disturbing normal receivers, and representing a redundant code,

B. at certain receiving stations :
— the parity of each octet is verified (an invalid octet from the point of view of parity being denoted X),
— each octet is compared to different normal and redundant command codes (a valid octet from the point of view of parity but not belonging to the current sequence being denoted Z), and
— erroneous sequences are corrected or signalled to the decoder, according to circumstances, said correction and signalling operations being conducted in the following manner :
— in the case of a sequence of two codes :
a) if the two codes are recognized, the normal code is sent to the decoder,
b) if one code is recognized, the other being X, the sequence is corrected, the recognized code being deemed sufficient for recognition of the sequence, and the normal code is sent to the decoder, or
c) if one code is recognized, the other being Z, an error signal is sent to the decoder,
— in the case of a sequence of three codes :
a) if the three codes are recognized or if the sequence comprises one X, one Z, or two X, the sequence is corrected for the code or codes recognized sufficiently for correction, and the normal code is sent to the decoder, or
b) if the sequence comprises three X codes or one X code plus one Z code, an error signal is sent to the decoder, the sequence not being corrected,
— in the case of a sequence of four codes formed of a repeated pair of codes, one code being a mode change code ESC and the other being a code Y specifying a graphics character :
a) if the four codes are recognized or if the sequence comprises an X code, the normal code is sent to the decoder,
b) if the sequence comprises two X codes or one Z code, an error signal is sent to the decoder, or
c) for sequences of two codes non-repeated, the sequences (X, Y) or X differing from spacing code ESC by a single binary element are recognized, this being indicated to the decoder.

2. Process according to claim 1, characterized in that, the start of a page being indicated by the normal code for the page heading, denoted RS :

A. at the transmitter, a sequence of two codes is formed for the start of each page : the code RS, preceded by a redundant code having no significance, the sequence thereby being written (SOH ; RS), and

B. at certain receivers :
— sequences such as :

(SOH ; RS), (X ; RS), (SOH ; X)

17

are recognized and in these three cases the normal page heading code RS is sent to the decoder, and
— errors in such sequences as :

$$(X ; X), (Z ; RS), (SOH ; Z)$$

are recognized and indicated to the decoder.

3. Process according to claim 1, characterized in that, the end of a page being indicated by the normal code, denoted ETX :

A. at the transmitter, a sequence of two codes is formed for the end of each page : code ETX followed by a redundant code having no significance, for instance EOT,

B. at certain receivers :
— certain sequences such as :

$$(ETX ; EOT), (ETX ; C), (X ; EOT)$$

are recognized, and in these three cases, the normal page ending code ETX is sent to the decoder, and
— errors in such sequences as :

$$(X ; X),  (Z ; EOT), (ETX ; Z)$$

are recognized and indicated to the decoder.

4. Process according to claim 1, characterized in that synchronization of arrays is marked either by the normal code for carriage return RC followed by the line-spacing code LF, or by the array-start code US followed by the number of the array,

A. at the transmitter, a sequence of three codes (RC ; LF ; US) is formed for the start of each array, and

B. at certain receivers :
— the following sequences :

| | |
|---|---|
| (RC ; LF ; US) | (RC ; X ; X) |
| (X ; LF ; US) | (X ; LF ; X) |
| (RC ; X ; US) | (Z ; LF ; US) |
| (RC ; LF ; X) | (RC ; Z ; US) |
| (X ; X ; US) | (RC ; LF ; Z) |

are recognized, and for these ten cases, the normal array start code is sent to the decoder, and
— errors in sequences containing (X ; X ; X) or « X and Z » are recognized, and indicated to the decoder.

5. Process according to claim 1, characterized in that display of a graphics character is marked by a mode-change code ESC followed by a second code Y specifying the character,

A. at the transmitter, a sequence of four codes is formed for certain display characters : code ESC followed by code Y, the sequence being repeated, viz. (ESC ; Y ; ESC ; Y),

B. at certain receivers :
— the sequences

$$(ESC ; Y ; ESC ; Y)$$
$$(ESC ; X ; ESC ; Y)$$
$$(ESC ; Y ; X ; Y)$$
$$(X ; Y ; ESC ; Y)$$

are recognized and in these four instances the normal code (ESC ; Y) is sent to the decoder,
— errors are recognized in such sequences as

| | |
|---|---|
| (X ; X ; ESC ; Y) | (ESC ; X ; X ; Y) |
| (X ; Y ; X ; Y) | (Z ; Y ; ESC ; Y) |
| (ESC ; Z ; ESC ; Y) | (ESC ; Y ; Z ; Y) |

and indicated to the decoder,

C. for non-repeated sequences (ESC ; Y), sequences (X ; Y) or X differing from ESC by a single binary element are recognized and indicated to the decoder.

6. Process according to any one of claims 1 to 5, characterized in that, at the transmitter, items of information are positioned systematically at different positions on the page at the time of successive transmissions.

7. Videographic receivers for putting into operation the process of claim 1, and comprising :

— a circuit 20 for reception and demodulation of a television signal,

— a digital signal treatment channel 22, said channel especially containing a digital junction 24 followed by a digital signal decoder 26,

— a video image signal treatment channel 28, and

— a display unit 30,

characterized in that digital signal treatment channel 22 comprises, between junction 24 and decoder 26, an identification circuit 26 comprising :

a) an automatic page selector 36 having an input receiving digital signals from digital junction 24, and two outputs 148 and 248, the function of said automatic selector being to recognize codes for the start of a page and a page-number, and to direct the digital signals initially to output 148 during first acquisition of a page, and then to output 248 for acquisitions after the first,

b) an automatic device 37 for first acquisitions having an input connected to output 148 of automatic page selector 36 and an output connected to digital decoder 26, the function of said automatic device being firstly to recognize codes other than that for the start of a page, and especially to detect the page-ending code and to emit a page-ending signal by an auxiliary output 67, and secondly to make corrections of erroneous codes and to signal uncorrected erroneous codes, and

c) an automatic device 38 for later acquisitions having an input connected to output 248 of automatic page selector 36 and an output connected to digital decoder 26, the function of said automatic device being progressively to eliminate errors existing in a page after initial acquisition thereof, and to block any information-transfer in the case of error between a detected error and the code-sequence for array-ending and page ending that follows.

8. Receiver according to claim 7, characterized in that the automatic page selector comprises :

— three loading registers 175, 176 and 177 for three digits defining a page number,

— a shift register with five cells 170 to 174,

— two comparators 183 and 184 connected to the last two cells of the shift register and adapted to compare their contents with page-starting codes RS and SOH,

— two parity detectors 191 and 192,

— three AND gates 193, 194 and 195 having two inputs connected to comparators 183-184 and to parity detectors 191-192,

— an OR gate 187 having three inputs connected to the outputs of AND gates 193, 194 and 195, each gate validating three comparators 178, 179 and 180 connected firstly to the three first cells 170, 171 and 172 of the shift register and secondly to the three registers 175, 176 and 177,

— a switch 181 connected to the output of the shift register and commanded by the three comparators 178, 179 and 180, said switch having two outputs 148 and 248, and

— a flip-flop 182 connected to switch 181.

9. Receiver according to claim 7, characterized in that the automatic device for initial acquisition comprises :

— a parity detector 49 whose input is connected to the output 148 of switch 181 of the automatic page selector,

— a shift register with plural memories 50, 51, 52 and 53 connected to parity detector 49,

— three switches 60, 61 and 62 located between the memories, said switches having one output connected to the succeeding memory and two inputs, one of which is connected to the preceding memory,

— three comparators 81, 82 and 83, containing the current codes for all command sequences, said comparators having their inputs connected to the outputs of memories 51 to 53, and making comparisons between the received codes and the current codes,

— a decision circuit 84 connected to said comparators and delivering command signals 73, 74 and 75, as a function of the results of the comparisons,

— three loading modules 70, 71 and 72 containing the command codes and an error code, said modules being commanded respectively by signals 73, 74 and 75, to operate switches 60, 61 and 62 to deliver either the codes stored in the preceding memory if they are identical with the current codes, or the codes registered in the loading module to which they are connected if the received codes are contaminated by small errors, or an error code stored in a loading module if the codes received are contaminated by major errors.

10. Receiver according to claim 7, characterized in that the automatic device for second acquisition has a construction analogous to that of the automatic device for initial acquisition according to claim 8, with the difference that, in place of a visualizable error symbol, a blocking code, for instance the code NUL, is memorized in the loading module where it inhibits the output of corresponding erroneous characters.

11. Receiver according to any one of claims 7 to 10, characterized in that it comprises a microprocessor for carrying out code-recognition operations and correction of erroneous codes.

19

**Ansprüche**

1. Verfahren zum Schützen eines asynchronen und ein veränderbares Format aufweisenden Videotextsystems gegen Übertragungsfehler, bei dem in einem Sendezentrum

— ein Magazin mit in Zeichenreihen organisierten Seiten gebildet wird,

— diese Zeichen in zu Daten-Oktetten (8 Binärelemente) gruppierten, numerischen Signalen verschlüsselt werden und Befehlsoktette, mit sechtem und siebtem Binärelement Null gebildet werden, die Kode bilden, die insbesondere den Anfang und das Ende der Seiten, den Anfang und das Ende der Zeilen sowie Attribute zur Sichtbarmachung umfassen, wobei diese Befehlsoktette durch eine Hamming-Kodierung geschützt sind und alle diese Befehlsoktette und Datenoktette ein Binärelement mit starkem Gewicht umfassen, welches ein Element mit ungerader Parität ist, das Magazin in der Form von Datenoktetten gespeichert wird, die zwischen die Befehlsoktette eingefügt sind,

— alle diese Signale werden in die Leitung eines Fernsehsignals eingefügt,

und bei dem in den Empfangsgeräten

— das Fernsehsignal empfangen wird,

— die numerischen, empfangenen Signale behandelt und einem Dekoder zugeführt werden,

— die empfangenen Videobildsignale behandelt werden,

— eine Sichtbarmachungseinrichtung mit diesen behandelten Signalen gesteuert wird,

dadurch gekennzeichnet, daß

A. in dem Sendezentrum

— die Befehlssignale gebildet werden, welche für jeden Befehl aus einer redundanten Folge von Oktetten besteht, wobei jede Folge aus mindestens zwei aufeinanderfolgenden Oktetten gebildet ist, von denen eines wenigstens den üblichen, dem in Frage stehenden Befehl entsprechenden Kode darstellt und das (oder die) andere(n) Oktett(e) keinerlei die üblichen Empfangsgeräte störende Bedeutung aufweisen und einen redundanten Kode darstellen,

B. in gewissen Empfangsgeräten

— die Parität eines jeden Oktetts überprüft wird (ein in Hinblick auf die Parität ungültiges Oktett wird mit X bezeichnet),

— jedes Oktett wird mit den verschiedenen, üblichen und redundanten Koden verglichen (ein in bezug auf die Parität gültiges Oktett, welches aber nicht zu der gerade vorliegenden Folge gehört, wird mit Z bezeichnet) und

— die fehlerhaften Folgen werden je nachdem korrigiert oder dem Dekoder angezeigt, wobei die Korrektur- und Anzeigevorgänge in der folgenden Weise durchgeführt werden :

— im Falle einer Folge von zwei Koden :

a) wenn die zwei Kode erkannt worden sind, wird der übliche Kode dem Dekoder zugeführt,

b) wenn ein Kode erkannt ist, der andere ist X, wird die Folge korrigiert, wobei der erkannte Kode als ausreichend zum Erkennen der Folge betrachtet wird, und der übliche Kode wird dem Dekoder zugeführt,

c) wenn ein Kode erkannt ist, der andere ist Z, wird ein Fehlersignal dem Dekoder zugeführt,

— im Fall einer Folge von drei Koden :

a) wenn die drei Kode erkannt sind oder wenn die Folge ein X, ein Z oder zwei X aufweist, wird die Folge für den oder die für die Korrektur als ausreichend erkannten Kode korrigiert und der übliche Kode wird dem Dekoder zugeführt,

b) wenn die Folge drei Kode X oder einen Kode X sowie einen Kode Z enthält, wird ein Fehlersignal dem Dekoder zugeführt, wobei die Folge nicht korrigiert werden kann,

— im Fall einer Folge von vier Koden, die aus zwei Doppelkoden gebildet ist, wobei einer der Kode ein Ausgabesteuerkode ESC und der andere ein Kode Y ist, welcher ein Sichtbarmachungsattribut festlegt :

a) wenn die vier Kode erkannt worden sind oder wenn die Folge einen Kode X enthält, wird dem Dekoder der übliche Kode zugeführt,

b) wenn die Folge zwei Kode X oder einen Kode Z enthält, wird ein Fehlersignal dem Dekoder zugeführt,

c) bei den Folgen von zwei nicht verdoppelten Koden werden die Folgen (X, Y) erkannt, bei denen X von einem Ausgabesteuerkode ESC um ein einziges Binärelement abweicht, und dies wird dem Dekoder angezeigt.

2. Verfahren nach Anspruch 1, dadurch gekennzeichnet, daß ein Anfang der Seite mit dem üblichen Markierungskode für die Seite, welcher mit RS bezeichnet ist, gekennzeichnet ist :

A. in dem Sender wird für jeden Anfang der Seite eine Folge von zwei Koden gebildet : der Kode RS, dem ein redundanter Kode ohne irgendwelche Bedeutung vorangeht, beispielsweise der Kode SOH, wobei sich dann die Folge schreibt als (SOH ; RS),

B. in gewissen Empfangsgeräten :

— es werden Folgen erkannt wie :

**0 019 545**

(SOH ; RS), (X ; RS), (SOH ; X)

und man ersetzt in den drei Fällen am Dekoder den üblichen Markierungskode RS für die Seite,
— es wird festgestellt, daß ein Fehler in den Folgen vorliegt wie :

(X ; X), (Z ; RS), (SOH ; Z)

und dies wird dem Dekoder angezeigt.

3. Verfahren nach Anspruch 1, dadurch gekennzeichnet, daß ein Ende einer Seite durch den üblichen mit ETX bezeichneten Kode gekennzeichnet ist :

A. in dem Sender wird für jedes Seitenende eine Folge von zwei Koden gebildet : der Kode ETX, dem ein redundanter Kode ohne irgendwelche Bedeutung folgt, beispielsweise der Kode EOT,

B. in gewissen Empfangsgeräten :
— es werden Folgen erkannt wie :

(ETX ; EOT), (ETX ; X), (X ; EOT)

und es wird in den drei Fällen dem Dekoder der übliche Kode ETX für ein Seitenende zugeführt,
— es wird festgestellt, daß in den Folgen ein Fehler vorliegt wie :

(X ; X), (Z ; EOT), (ETX ; Z)

und dies wird dem Dekoder angezeigt.

4. Verfahren nach Anspruch 1, dadurch gekennzeichnet, daß die Reihensynchronisation entweder durch den üblichen Kode für den Wagenrücklauf RC, dem ein Kode LF für den Zeilensprung folgt, oder durch den Markierungskode US für die Reihe, dem die Nummer der Reihe folgt, gekennzeichnet wird,

A. in dem Sender wird für jeden Reihenanfang eine Folge von drei Koden (RC ; LF ; US) gebildet,

B. in gewissen Empfangsgeräten :
— es werden die Folgen erkannt :

(RC ; LF ; US)                   (RC ; X ; X)
(X ; LF ; US)                    (X ; LF ; X)
(RC ; X ; US)                   (Z ; LF ; US)
(RC ; LF ; X)                    (RC ; Z ; US)
(X ; X ; US)                      (RC ; LF ; Z)

und in den zehn Fällen wird dem Dekoder der übliche Kode für den Reihenanfang zugeführt,
— es wird festgestellt, daß ein Fehler in den Folgen vorliegt, welche (X ; X ; X) oder « X und Z » enthalten und dies wird dem Dekoder angezeigt.

5. Verfahren nach Anspruch 1, dadurch gekennzeichnet, daß ein Sichtbarmachungsattribut für die Zeichen durch einen Ausgabesteuerkode ESC gekennzeichnet ist, der von einem zweiten, das Attribut festlegenden Kode Y gefolgt ist,

A. in dem Sender wird für gewisse Sichtbarmachungsattribute eine Folge von vier Koden gebildet : der Kode ESC, dem der Kode Y folgt, wobei das Ganze verdoppelt wird, d. h. (ESC ; Y ; ESC ; Y),

B. in gewissen Empfangsgeräten :
— es werden erkannt die Folgen :

(ESC ; Y ; ESC ; Y)
(ESC ; X ; ESC ; Y)
(ESC ; Y ; X ; Y)
(X ; Y ; ESC ; Y)

und in den vier Fällen wird dem Dekoder der übliche Kode (ESC ; Y) zugeführt,
— es wird festgestellt, daß ein Fehler in den Folgen vorliegt, wie :

(X ; X ; ESC ; Y)                 (ESC ; X ; X ; Y)
(X ; Y ; X ; Y)                   (Z ; Y ; ESC ; Y)
(ESC ; Z ; ESC ; Y)             (ESC ; Y ; Z ; Y)

und dies wird dem Dekoder angezeigt,

C. für die nicht gedoppelten Folgen (ESC ; Y) werden die Folgen (X, Y) festgestellt, bei denen sich X von ESC um ein einziges Binärelement unterscheidet, und dies wird dem Dekoder angezeigt.

6. Verfahren nach irgendeinem der Ansprüche 1 bis 5, dadurch gekennzeichnet, daß in dem Sender systematisch die Informationen über die Seiten an unterschiedlichen Positionen während der aufeinanderfolgenden Übertragungen angeordnet werden.

7. Videotext-Empfangsgerät zur Durchführung des Verfahrens nach Anspruch 1, umfassend ;
— einen Schaltkreis 20 zum Empfangen und Demodulieren eines Fernsehsignals,
— einen Pfad 22 zur Behandlung numerischer Signale, welcher insbesondere eine von einem Dekoder 26 für numerische Signale gefolgte numerische Verbindung 24 aufweist,
— einen Pfad 28 zur Behandlung von Videobildsignalen,
— eine Sichtbarmachungseinrichtung 30,
dadurch gekennzeichnet, daß das Empfangsgerät in dem Pfad 22 zur Behandlung numerischer Signale und zwischen der Verbindung 24 und dem Dekoder 26 eine Identifikationsschaltung 25 aufweist, die umfaßt :

a) eine Seitenauswahlautomatik 26 mit einem Eingang, der die numerischen Signale von der numerischen Verbindung 24 empfängt, und mit zwei Ausgängen 148 und 248, wobei diese Automatik die Funktion hat, Kode am Anfang der Seite und die Nummern der Seite zu Erkennen und die numerischen Signale zunächst zu dem Ausgang 148 während der ersten Erfassung einer Seite und dann zu dem Ausgang 248 während der der ersten Erfassung nachfolgenden Erfassungen zu führen,

b) eine Automatik 37 für die erste Erfassung mit einem Eingang, der mit dem Ausgang 148 der Seitenauswahlautomatik 36 verbunden ist, und mit einem Ausgang, der mit dem numerischen Dekoder 26 verbunden ist, wobei diese Automatik die Funktion hat, einerseits die anderen als die Seitenanfangskode zu erkennen und insbesondere den Kode für das Seitenende festzustellen und an einem zusätzlichen Ausgang 67 ein Signal für das Ende der Seite abzugeben, und andererseits Korrekturen an den fehlerhaften Koden vorzunehmen und die fehlerhaften, nicht korrigierten Kode anzuzeigen,

c) eine Automatik 38 für weitere Erfassungen mit einem Eingang, der mit dem Ausgang 248 der Seitenauswahlautomatik 24 verbunden ist, und mit einem Ausgang, der mit dem numerischen Dekoder 26 verbunden ist, wobei diese Automatik die Funktion hat, fortschreitend die nach der ersten Erfassung in der Seite verbleibenden Fehler zu eliminieren, indem jegliche Informationsübertragung im Fehlerfall zwischen einem festgestellten Fehler und der Folge von Koden des Reihenendes und des Endes der Seite unterbunden wird, die folgt.

8. Empfangsgerät nach Anspruch 7, dadurch gekennzeichnet, daß die Seitenauswahlautomatik gebildet ist von :
— drei Laderegistern 175, 176 und 177 für drei eine Seitenzahl festlegende Zahlen,
— einem Schieberegister mit fünf Stellen 170 bis 174,
— zwei Vergleichsschaltungen 183 und 184, die mit den zwei letzten Stellen des Schieberegisters verbunden sind und deren Inhalt mit den Koden RS und SOH für den Seitenanfang vergleichen können,
— zwei Paritätserfassungseinrichtungen 191 und 192,
— drei Toren ET 193, 194 und 195 mit zwei Eingängen, die mit den Vergleichsschaltungen 183 bis 184 und den Paritätserfassungseinrichtungen 191-192 verbunden sind,
— einem Tor OU 187 mit drei Eingängen, die mit den Ausgängen der Tore ET 193, 194 und 195 verbunden sind, wobei dieses Tor drei Vergleichsschaltungen 178, 179 und 180 gültig macht, die einerseits mit den drei ersten Stellen 170, 171 und 172 des Schieberegisters und andererseits mit den drei Registern 175, 176 und 177 verbunden sind,
— einer Weiche 181, die mit dem Ausgang des Schieberegisters verbunden ist und von den drei Vergleichsschaltungen 178, 179 und 180 gesteuert wird, wobei diese Weiche zwei Ausgänge 148 und 248 aufweist,
— einem stabilen Multivibrator 182, der mit der Weiche 181 verbunden ist.

9. Empfangsgerät nach Anspruch 7, dadurch gekennzeichnet, daß die Automatik für die erste Erfassung gebildet ist von :
— einer Paritätserfassungseinrichtung 49, deren Eingang mit dem Ausgang 148 der Weiche 181 der Seitenauswahlautomatik verbunden ist,
— einem Schieberegister mit mehreren Speichern 50, 51, 52, 53, welches mit der Paritätserfassungseinrichtung 49 verbunden ist,
— drei Weichen 60, 61, 62, die zwischen den Speichern eingefügt sind, wobei diese Weichen einen Ausgang, der mit dem folgenden Speicher verbunden ist, und zwei Eingänge aufweisen, von denen einer mit dem vorausgehenden Speicher verbunden ist,
— drei Vergleichsschaltungen 81, 82 und 83, die die in allen Befehlsfolgen gerade geltenden Kode enthalten, wobei die Vergleichsschaltungen mit ihren Eingängen mit dem Ausgang der Speicher 51 bis 53 verbunden sind und einen Vergleich zwischen den empfangenen Koden und den gerade geltenden Koden durchführen,
— von einem logischen Entscheidungsschaltkreis 84, der mit den Vergleichsschaltungen verbunden ist und in Abhängigkeit der Vergleichsergebnisse Steuersignale 73, 74 und 75 liefert,
— drei Lademodulen 70, 71 und 72, die die Befehlskode und einen Fehlerkode enthalten und jeweils von den Signalen 73, 74 und 75 gesteuert werden, wobei die Weichen 60, 61 und 62 entweder die in dem vorausgehenden Speicher gespeicherten Kode, wenn diese mit den gerade geltenden Koden identisch sind, oder die in dem Lademodul aufgezeichneten Kode, mit denen sie verbunden sind, wenn die empfangenen Kode leichte Fehler aufweisen, oder einen Fehlerkode abgreifen, der von einem Lademodul abgenommen wird, wenn die empfangenen Kode schwere Fehler aufweisen.

10. Empfangsgerät nach Anspruch 7, dadurch gekennzeichnet, daß die Automatik für die zweite Erfassung die analoge Ausgestaltung wie die Automatik für die erste Erfassung gemäß Anspruch 8 aufweist, mit dem Unterschied, daß statt und anstelle eines sichtbar machbaren Fehlersymbols ein Füllkode beispielsweise der Kode NUL in dem Lademodul gespeichert wird, wo dieser den Ausgang entsprechend fehlerhafter Zeichen unterbindet.

11. Empfangsgerät nach irgendeinem der Ansprüche 7 bis 10, dadurch gekennzeichnet, daß es einen Mikroprozessor umfaßt, um die Vorgänge zum Erkennen der Kode umd zum Korrigieren der fehlerhaften Kode durchzuführen.

0 019 545

# FIG. 1

EMETTEUR

2

MAGAZINE

6

8 — TRAIT. ET MEM.

10

12 — MULTIPLEX

14 — MODUL.

16

4

RECEPTEURS

RECEPT. DEMOD.

20

TRAIT. SIGN. 22 NUM.

TRAIT. SIGN. 28 IMAGE

30

4'

1

FIG. 2

FIG. 3

CIRCUIT IDENTIFICATEUR

**FIG. 4**

CIRCUITS LOGIQUES

**FIG. 10**

FIG. 5

AUTOMATE
DE SELECTION

0 019 545

FIG. 6
AUTOMATE DE PREMIERE
ACQUISITION

FIG. 7

MODULE CHARGEMENT

73

MEM. 110 (&)

MEM. 111 (RC)

70

112 MULTIPLEX

$eb_3$

$eb_2$

$eb_1$

MEM. 50

60

51

0 019 545

MODULES DE CHARGEMENT

FIG. 8

FIG. 9

0 019 545

FIG. 11